(19) **Europäisches Patentamt / European Patent Office / Office européen des brevets**

(11) **EP 4 694 172 A1**

(12) **EUROPEAN PATENT APPLICATION**
published in accordance with Art. 153(4) EPC

(43) Date of publication:
11.02.2026 Bulletin 2026/07

(21) Application number: 24779405.0

(22) Date of filing: 12.03.2024

(51) International Patent Classification (IPC):
H04N 25/766 (2023.01)  H04N 23/54 (2023.01)
H04N 25/70 (2023.01)  H04N 25/79 (2023.01)
H04N 25/772 (2023.01)  H04N 25/773 (2023.01)

(52) Cooperative Patent Classification (CPC):
H04N 23/54; H04N 25/70; H04N 25/766;
H04N 25/772; H04N 25/773; H04N 25/79

(86) International application number:
PCT/JP2024/009526

(87) International publication number:
WO 2024/203275 (03.10.2024 Gazette 2024/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.03.2023 JP 2023051057
08.11.2023 JP 2023190473

(71) Applicant: Sony Semiconductor Solutions
Corporation
Atsugi-shi, Kanagawa 243-0014 (JP)

(72) Inventors:
• IKEDA, Yasuji
  Atsugi-shi, Kanagawa 243-0014 (JP)
• KURODA, Yuki
  Atsugi-shi, Kanagawa 243-0014 (JP)
• TEZUKA, Taiki
  Atsugi-shi, Kanagawa 243-0014 (JP)
• MORIYA, Kodai
  Atsugi-shi, Kanagawa 243-0014 (JP)

(74) Representative: Müller Hoffmann & Partner
Patentanwälte mbB
St.-Martin-Strasse 64
81541 München (DE)

(54) **PHOTODETECTOR AND APPLICATION PROCESSOR**

(57)     To achieve proper input/output properties of a light detection device and achieve an appropriate dynamic range with respect to incident light.

In order to achieve proper input/output properties of a light detection device and achieve an appropriate dynamic range with respect to incident light, a light detection device of the present technology includes: light detection elements that detects incidence of photon; an output unit that outputs a result of imaging by the light detection elements; a recharge unit that recharges the light detection elements; and a control unit that controls the recharge unit in regard to at least either a detection interval or the number of times of detection of photons by the light detection elements on the basis of the result of imaging.

Fig. 1

EP 4 694 172 A1

## Description

[Technical Field]

The present technology relates to a light detection device. More particularly, the present technology relates to a light detection device that detects incidence of photons and an application processor that controls the light detection device.

[Background Art]

Conventionally, a photoelectric conversion device that includes a pixel array unit in which pixels including avalanche photodiodes are disposed in a planar manner in a two-dimensional array is known. For example, a photoelectric conversion device that changes a detection interval at which incidence of photons is detected in accordance with an exposure time has been proposed (see PTL 1, for example).

[Citation List]

[Patent Literature]

[PTL 1]
JP 2022-106660A

[Summary]

[Technical Problem]

According to the above-mentioned prior art, power consumption of the photoelectric conversion device is suppressed by changing the detection interval in accordance with the exposure time. However, the above-mentioned photoelectric conversion device performs control only on the number and a cycle of pulse signals within exposure periods in a case where the exposure periods differ, and there is a concern that some incident light may not fall within a proper dynamic range.

The present technology was made in view of such circumstances, and an object thereof is to achieve proper input/output properties of a light detection device and to achieve an appropriate dynamic range for incident light in a light detection device that detects incidence of photons.

[Solution to Problem]

The present technology was made in order to solve the above-mentioned problem, and a first aspect thereof is a light detection device including: light detection elements that detect incidence of photons; an output unit that outputs a result of imaging by the light detection elements; a recharge unit that recharges the light detection elements; and a control unit that controls the recharge unit in regard to at least either a detection interval or the number of times of detection of the photons by the light detection elements on the basis of the result of imaging. This leads to an effect that it is possible to achieve proper input/output properties of the light detection device and to achieve an appropriate dynamic range with respect to incident light.

In the first aspect, the light detection device may include: a pixel array unit in which the light detection elements are disposed in an array; a setting unit that determines the detection interval and the number of times of detection of the photons; an image processing unit that generates an image signal on the basis of a signal of the pixel array unit output as the result of imaging from the output unit; and a feature extraction unit that extracts a feature signal on the basis of the result of imaging, and the control unit may control setting information of the setting unit on the basis of the feature signal extracted by the feature extraction unit. This leads to an effect that it is possible to achieve proper input/output properties of a reading circuit and thus to achieve an appropriate dynamic range with respect to incident light.

In the first aspect, the feature signal may be a dynamic range detected on the basis of a histogram indicating a detection frequency as a frequency, a maximum value or a minimum value of a horizontal axis of the histogram, an average brightness value, or a median of the maximum detection frequencies. This leads to an effect that it is possible to achieve proper input/output properties of the light detection device and to achieve an appropriate dynamic range with respect to incident light.

In the first aspect, the image processing unit may include a linearizing circuit in an input stage, and the feature extraction unit may extract the feature signal on the basis of a signal of the image array unit after being subjected to the linearizing circuit. This leads to an effect that it is possible to achieve proper input/output properties of a reading circuit and thus to achieve an appropriate dynamic range with respect to incident light.

In the first aspect, the pixel array unit may output a count value of the photons, and the image processing unit may include a lookup table generation unit that generates a lookup table in which the count value and a photon rate are associated on the basis of the detection interval and the number of times of detection and the linearizing circuit that converts the count value into the photon rate with reference to the lookup table and supplies the photon rate to the feature extraction unit. This leads to an effect that linearizing is appropriately executed.

In this first aspect, the lookup table generation unit may generate the lookup table using an inverse function of a function representing a response property of the pixel array unit in response to an input of the photons. This leads to an effect that linearizing is appropriately executed.

In the first aspect, the setting unit may set two or more detection intervals, and the lookup table generation unit may generate the lookup table by calculating the photon rate for each count value by the inverse function for each of the detection intervals, sorting a group of the calculated photo rates in accordance with a predetermined rule, and assigning the count value to each of the sorted photon rates. This leads to an effect that linearizing is appropriately executed when a plurality of detection intervals are set.

In the first aspect, the setting unit may set two or more detection intervals, the lookup table may include a plurality of combination source lookup tables and a combination destination lookup table with different detection intervals, the lookup table generation unit may generate the combination destination lookup table through weighted addition of the photon rate in each of the plurality of combination source lookup tables, and the linearizing circuit may refer to the combination destination lookup table. This provides an effect that the amount of arithmetic operation is reduced.

In the first side surface, the pixel array unit, he setting unit, and the output unit may be disposed on a first chip, and the control unit, the image processing unit, and the feature extraction unit may be disposed on a second chip. It is possible to achieve proper input/output properties of the reading circuit in this disposition example as well, and this also leads to an effect that it is possible to achieve an appropriate dynamic range with respect to incident light.

In the first aspect, the pixel array unit, the setting unit, and the output unit may be disposed on a first chip, the image processing unit and the feature extraction unit may be disposed on a second chip, and the control unit may be disposed on a third chip. It is possible to achieve proper input/output properties of the reading circuit in this disposition example as well, and this also leads to an effect that it is possible to achieve an appropriate dynamic range with respect to incident light.

In the first aspect, the pixel array unit, the setting unit, the output unit, and the control unit may be disposed on a first chip, and the image processing unit and the feature extraction unit may be disposed on a second chip. It is possible to achieve proper input/output properties of the reading circuit in this disposition example as well, and this also leads to an effect that it is possible to achieve an appropriate dynamic range with respect to incident light.

In the first aspect, the feature extraction unit may extract the feature signal on the basis of an image signal generated by the image processing unit. This leads to an effect that it is possible to achieve proper input/output properties of a reading circuit and thus to achieve an appropriate dynamic range with respect to incident light.

In the first aspect, the pixel array unit, the setting unit, and the output unit may be disposed on a first chip, the image processing unit may be disposed on a second chip, and the control unit and the feature extraction unit may be disposed on a third chip. It is possible to achieve proper input/output properties of the reading circuit in this disposition example as well, and this also leads to an effect that it is possible to achieve an appropriate dynamic range with respect to incident light.

In the first aspect, the feature extraction unit may include a linearizing circuit in an input stage and extract the feature signal on the basis of a signal of the pixel array unit after being subjected to the linearizing circuit. This leads to an effect that it is possible to achieve proper input/output properties of a reading circuit and thus to achieve an appropriate dynamic range with respect to incident light.

In the first aspect, the pixel array unit, the setting unit, the output unit, the control unit, and the feature extraction unit may be disposed on a first chip, and the image processing unit may be disposed on a second chip. It is possible to achieve proper input/output properties of the reading circuit in this disposition example as well, and this also leads to an effect that it is possible to achieve an appropriate dynamic range with respect to incident light.

In the first aspect, the control unit may control setting information of the setting unit on the basis of external control by a user. This leads to an effect that the user can arbitrarily control at least either the detection interval or the number of times of detection of the photons.

In the first aspect, the control unit may set a plurality of detection intervals as the detection interval of the photons and perform detection of the photons at the plurality of detection intervals. This leads to an effect that it is possible to realize imaging with a high dynamic range of a widened brightness range in which the number of times of detection of the photons has gradation and imaging to raise gradation in a specific brightness range.

In the first aspect, the control unit may perform control to maximize gradation of the number of times of detection of the photons with respect to brightness distribution on the basis of a histogram of the brightness distribution in an entire image of a scene. This leads to an effect that an appropriate detection interval of photons with respect to the brightness distribution of the scene and the count value of photons can be controlled and it is thus possible to obtain maximum information of the scene.

In the first aspect, the control unit may perform control to maximize gradation of the number of times of detection of the photons with respect to brightness distribution on the basis of a histogram of the brightness distribution in a region of a subject that is a target. This leads to an effect that an appropriate detection interval of photons with respect to the brightness distribution of the subject that is a target and the count value of the photons can be controlled and it is thus possible to obtain maximum information of the subject.

In the first aspect, the control unit may perform control to minimize the number of times of detection of the photons within a range of not falling short of a signal-to-noise ratio (SNR) that is required as a minimum within a brightness range of a scene when SNR curves of the plurality of detection intervals are plotted. This leads to an effect that it is possible to curb power consumption of the light detection device.

In the first aspect, the control unit may perform control to shift only a dynamic range without changing the shape of a sensor response curve created on the basis of a frequency distribution of photon rates created by the feature extraction unit. This leads to an effect that it is possible to shift only the dynamic range with gradation fixed.

In the first aspect, the feature extraction unit may include a wave detection circuit that creates a frequency distribution of photon rates on the basis of the result of imaging and a target sensor response curve setting unit that creates a sensor response curve that is a target on the basis of the frequency distribution of the photon rates, the image processing unit, the wave detection circuit, and the target sensor response curve designing unit, and the control unit may configure an application processor, and the application processor may output a signal to control at least either the detection interval or the number of times of detection of the photons to a sensor chip with the pixel array unit formed thereon. This leads to an effect that the application processor can control at least either the detection interval or the number of times of detection of the photons.

In the first aspect, the feature extraction unit may include a wave detection circuit that creates a frequency distribution of photon rates on the basis of the results of imaging and a target sensor response curve designing unit that creates a sensor response curve that is a target on the basis of the frequency distribution of the photon rates, the image processing unit, the wave detection circuit, and the control unit may configure an application processor, and the application processor may output a signal to control at least either the detection interval or the number of times of detection of the photons to a sensor chip with the pixel array unit and the target sensor response curve designing unit formed thereon. This leads to an effect that the application processor can control at least either the detection interval or the number of times of detection of the photons.

Moreover, a second aspect of the present technology is an application processor that uses as an input, a result of imaging output from a light detection device including light detection elements that detect incidence of photons, an output unit that outputs the result of imaging by the light detection elements, a recharge unit that recharges the light detection elements, and a control unit that controls the recharge unit for at least either a detection interval or the number of times of detection of the photons by the light detection elements on the basis of the result of imaging, detects a feature signal in the result of imaging, and outputs a signal to control at least either the detection interval or the number of times of detection of the photons by the light detection elements on the basis of the feature signal. This leads to an effect that it is possible to provide an application processor capable of achieving proper input/output properties of a light detection device and achieving an appropriate dynamic range with respect to incident light.

[Brief Description of Drawings]

[Fig. 1]

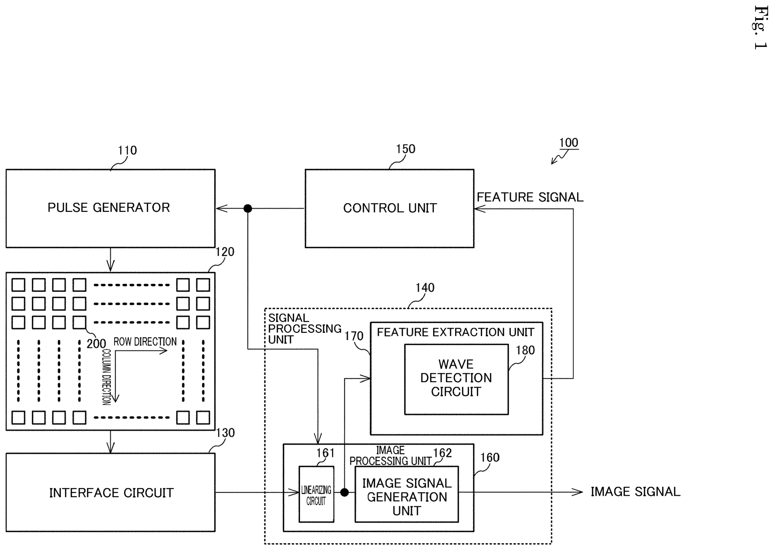

Fig. 1 is a block diagram illustrating a configuration example of a light detection device in a first embodiment of the present technology.
[Fig. 2]

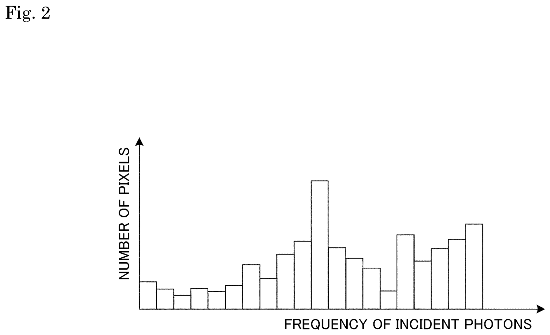

Fig. 2 is a diagram illustrating an example of a histogram generated by a feature extraction unit in the first embodiment of the present technology.
[Fig. 3]

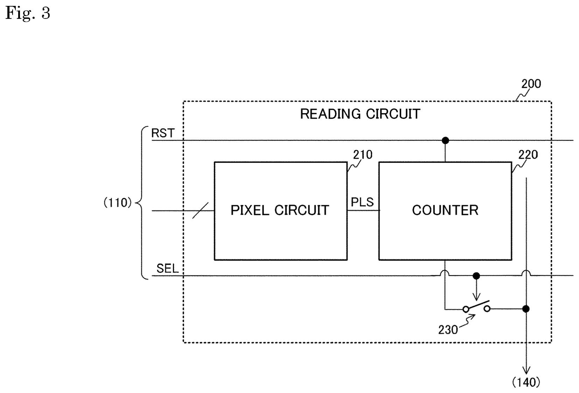

Fig. 3 is a block diagram illustrating a configuration example of a reading circuit in the first embodiment of the present technology.
[Fig. 4]

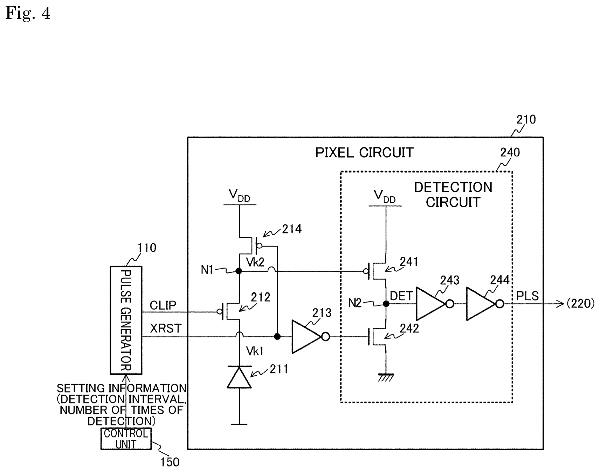

Fig. 4 is a circuit diagram illustrating a configuration example of a pixel circuit in the first embodiment of the present technology.
[Fig. 5]

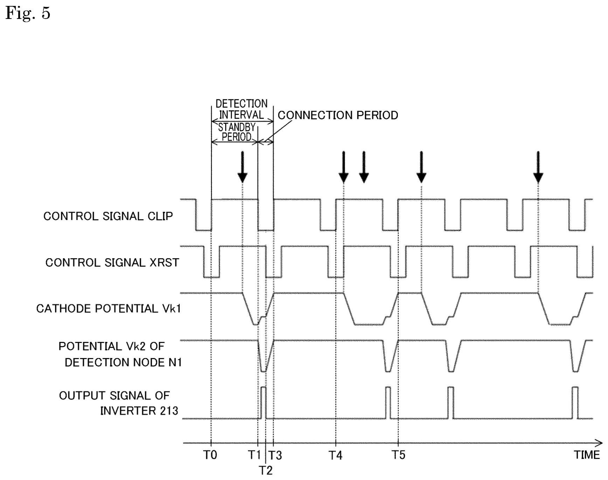

Fig. 5 is a timing chart illustrating an example of an operation of a light receiving unit in the first embodiment of the present technology.

[Fig. 6]

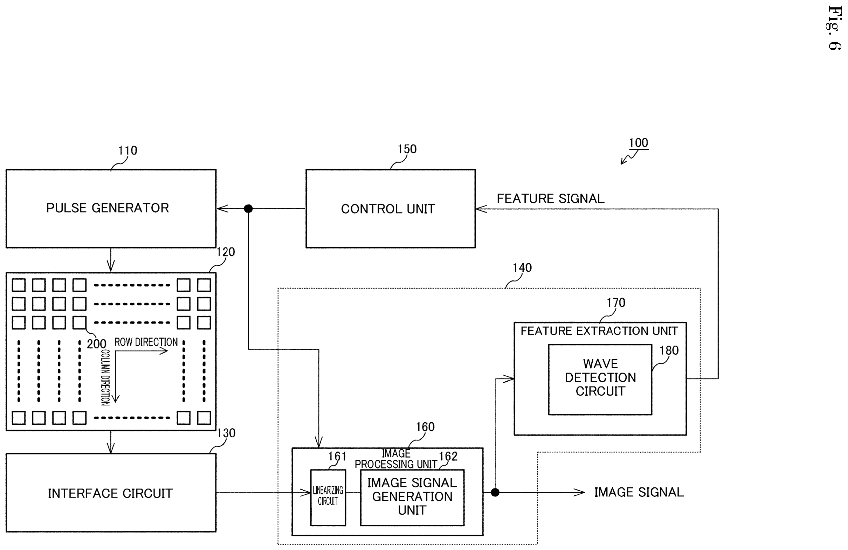

Fig. 6 is a block diagram illustrating a configuration example of a light detection device in a second embodiment of the present technology.

[Fig. 7]

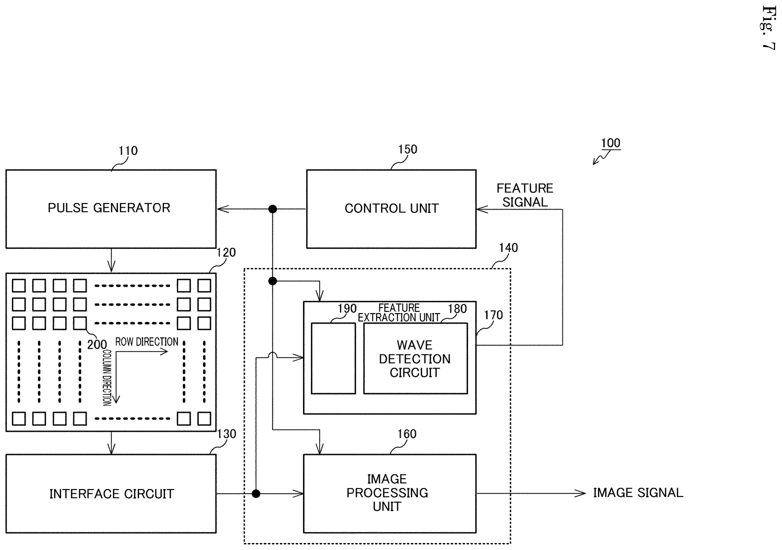

Fig. 7 is a block diagram illustrating a configuration example of a light detection device in a third embodiment of the present technology.

[Fig. 8]

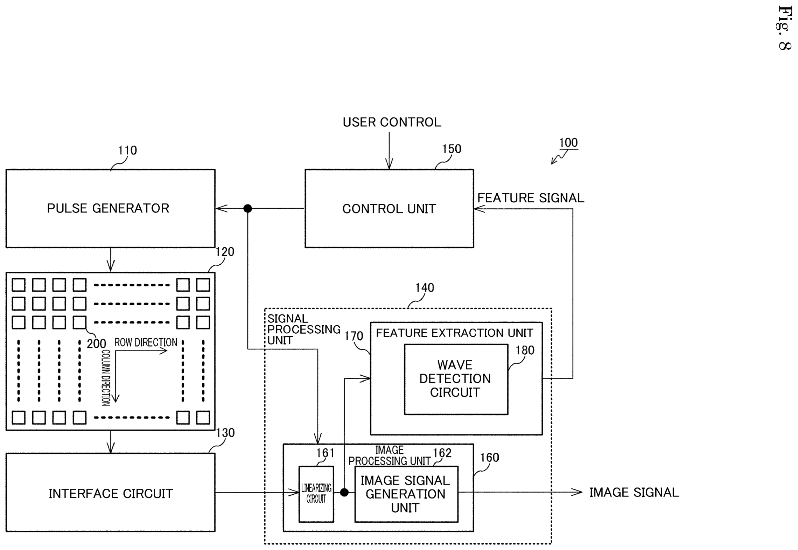

Fig. 8 is a block diagram illustrating a configuration example of a light detection device in a fourth embodiment of the present technology.

[Fig. 9]

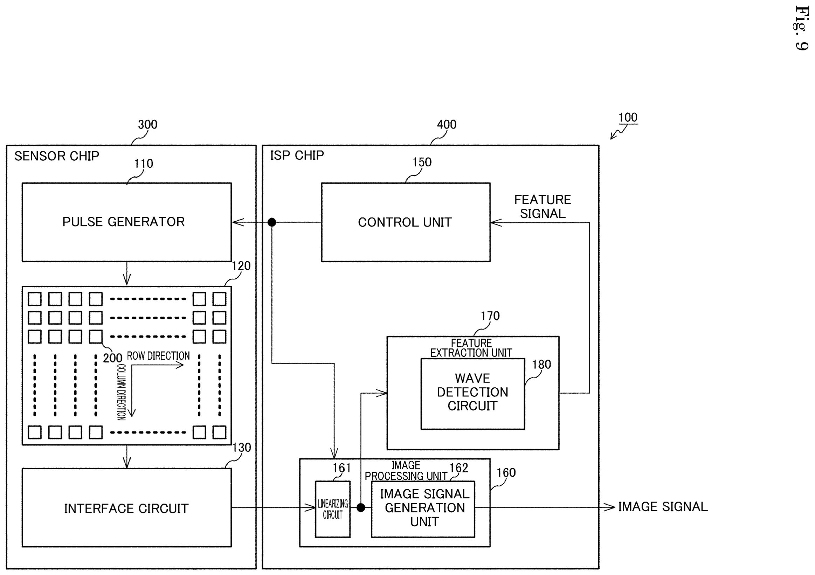

Fig. 9 is a block diagram illustrating a disposition example of a light detection device in a fifth embodiment of the present technology.

[Fig. 10]

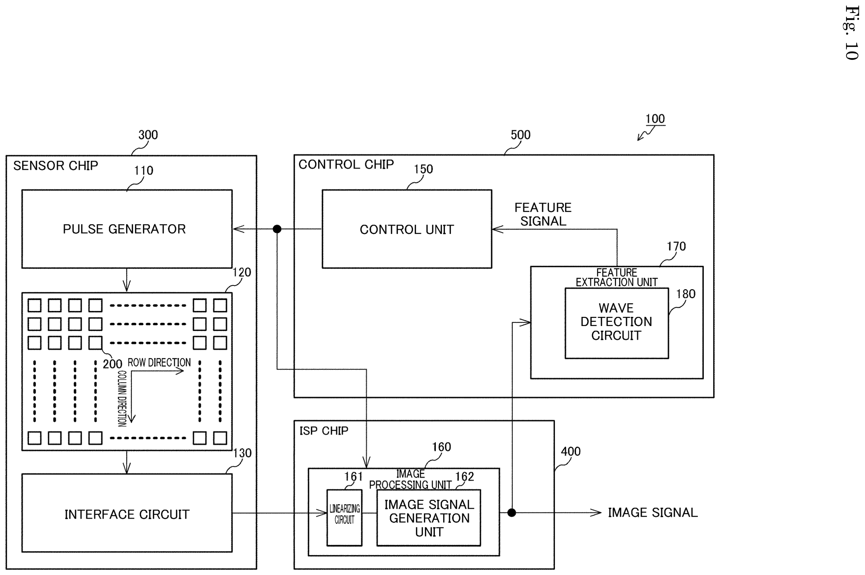

Fig. 10 is a block diagram illustrating a disposition example of a light detection device in a sixth embodiment of the present technology.

[Fig. 11]

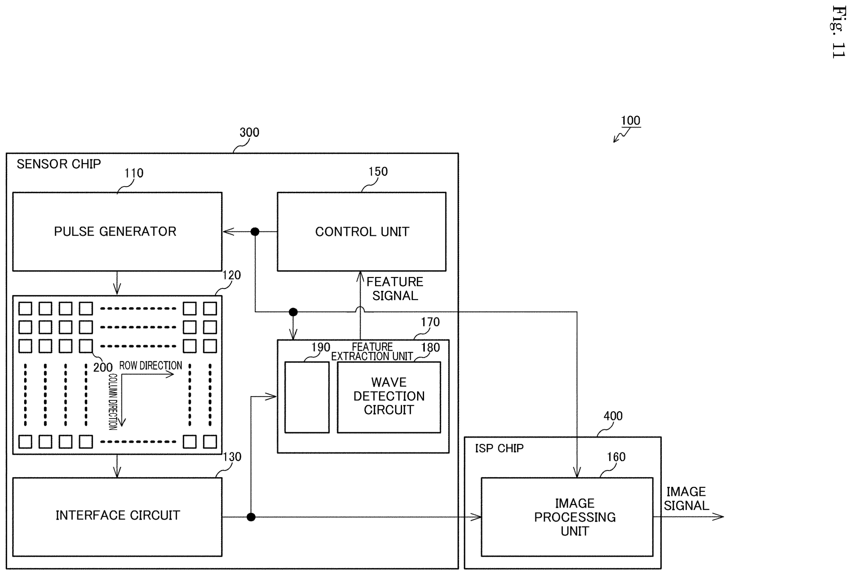

Fig. 11 is a block diagram illustrating a disposition example of a light detection device in a seventh embodiment of the present technology.

[Fig. 12]

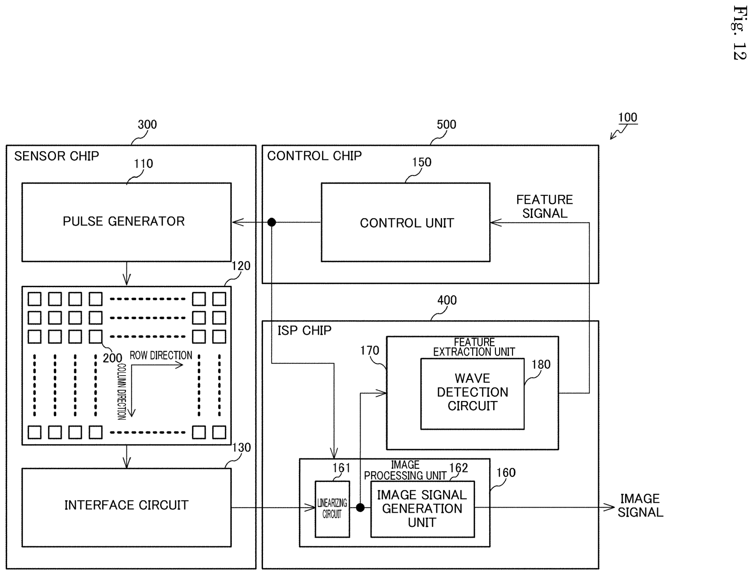

Fig. 12 is a block diagram illustrating a disposition example of a light detection device in an eighth embodiment of the present technology.

[Fig. 13]

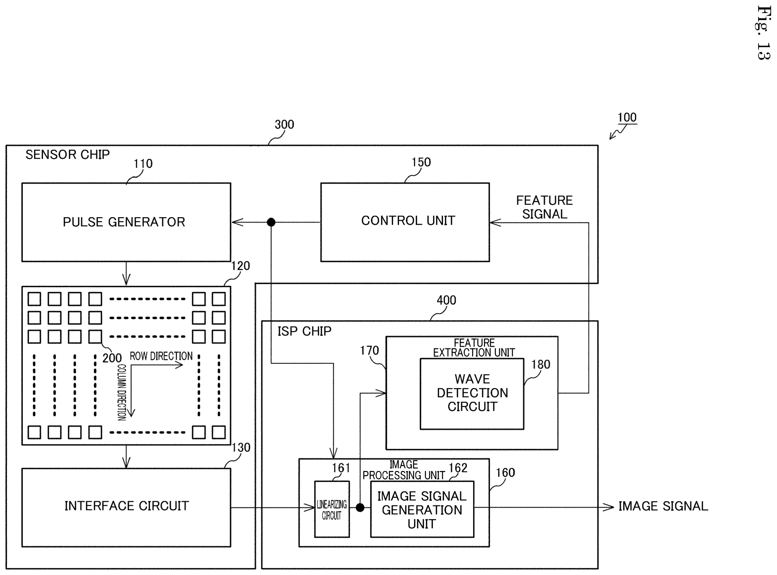

Fig. 13 is a block diagram illustrating a disposition example of a light detection device in a ninth embodiment of the present technology.

[Fig. 14]

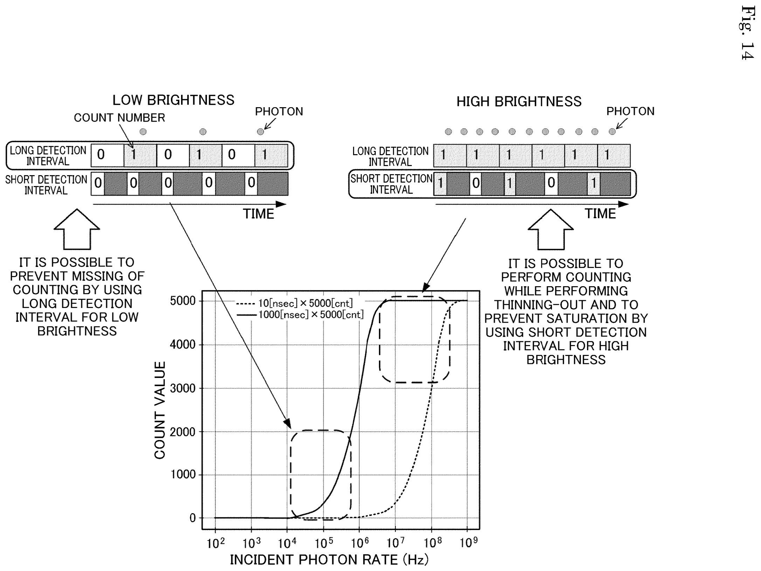

Fig. 14 is an explanatory diagram regarding a photon detection interval required in imaging of scenes with high brightness and low brightness.

[Fig. 15]

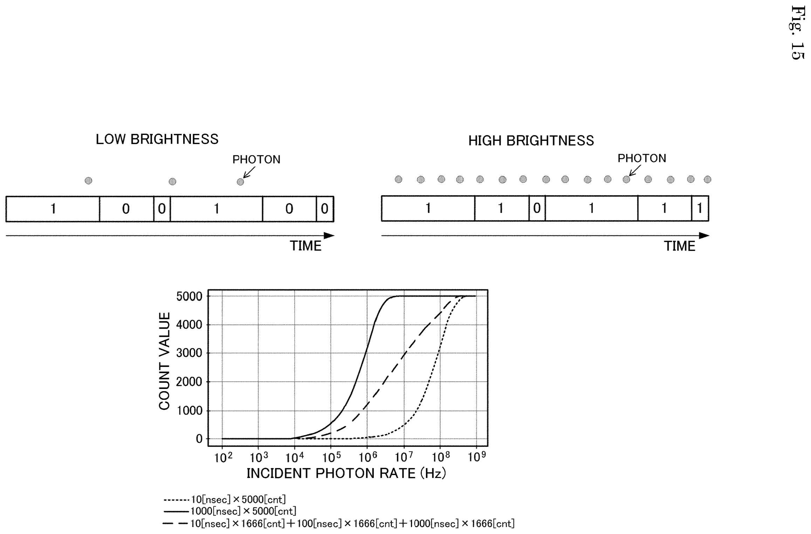

Fig. 15 is an explanatory diagram regarding a combination of long and short photon detection intervals.

[Fig. 16]

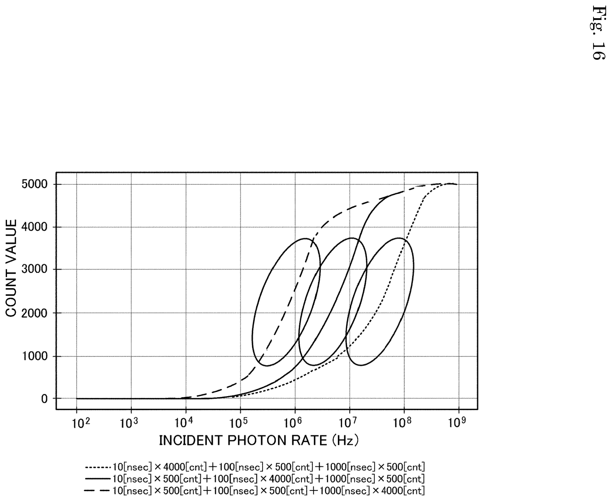

Fig. 16 is an explanatory diagram regarding gradation control for each level of brightness.

[Fig. 17]

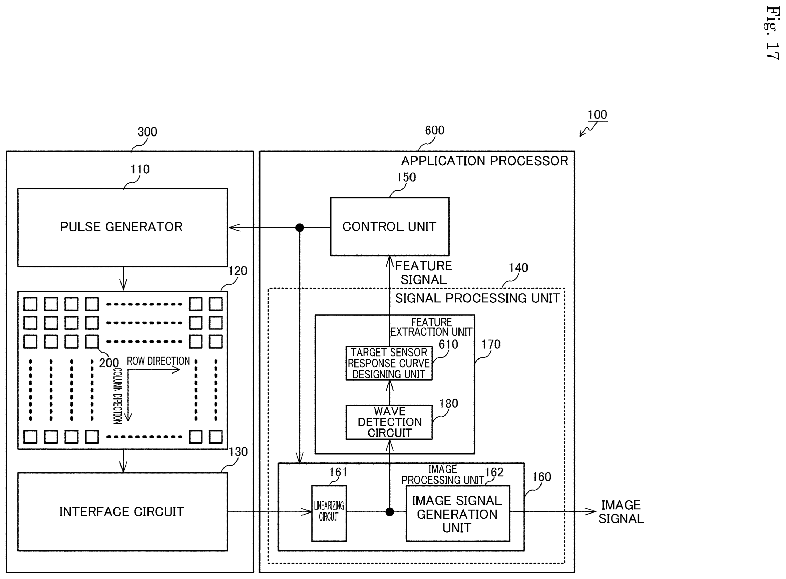

Fig. 17 is a block diagram illustrating a configuration example of a light detection device in a tenth embodiment of the present technology.

[Fig. 18]

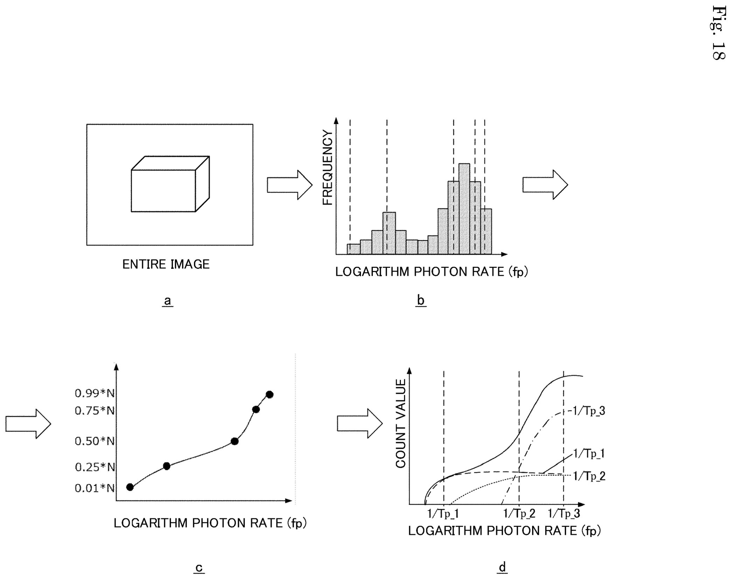

Fig. 18 is a diagram illustrating a flow of control in a gradation priority mode (1) in the light detection device in the tenth embodiment of the present technology.

[Fig. 19]

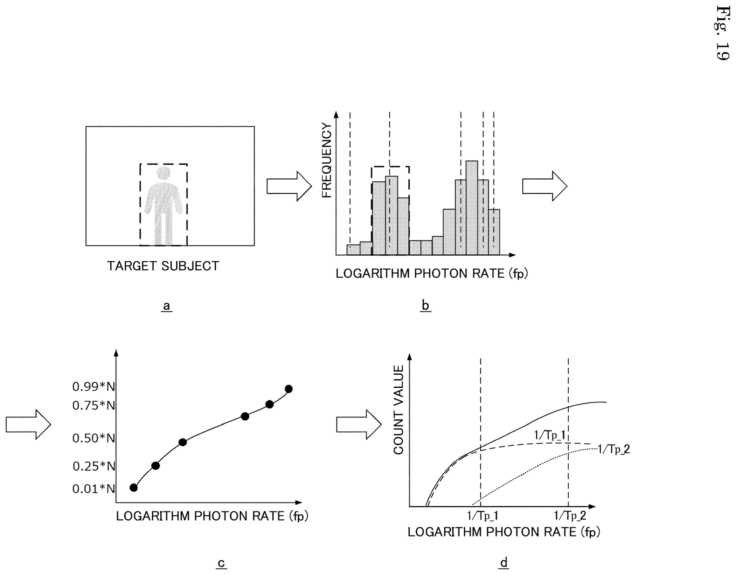

Fig. 19 is a diagram illustrating a flow of control in a gradation priority mode (2) in the light detection device in the tenth embodiment of the present technology.

[Fig. 20]

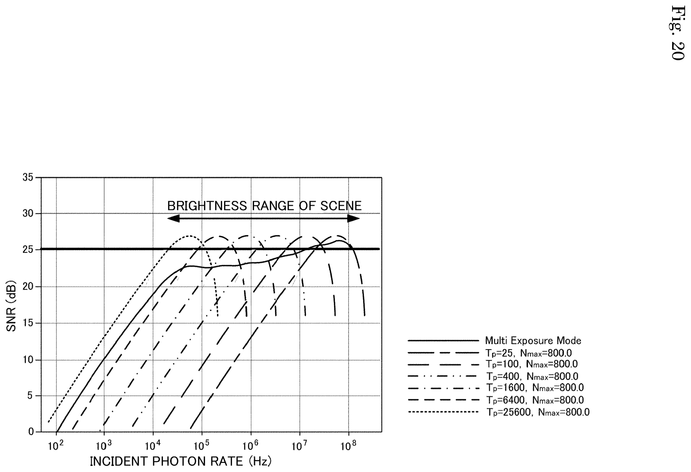

Fig. 20 is an explanatory diagram regarding low power consumption priority mode in the light detection device in the tenth embodiment of the present technology.

[Fig. 21]

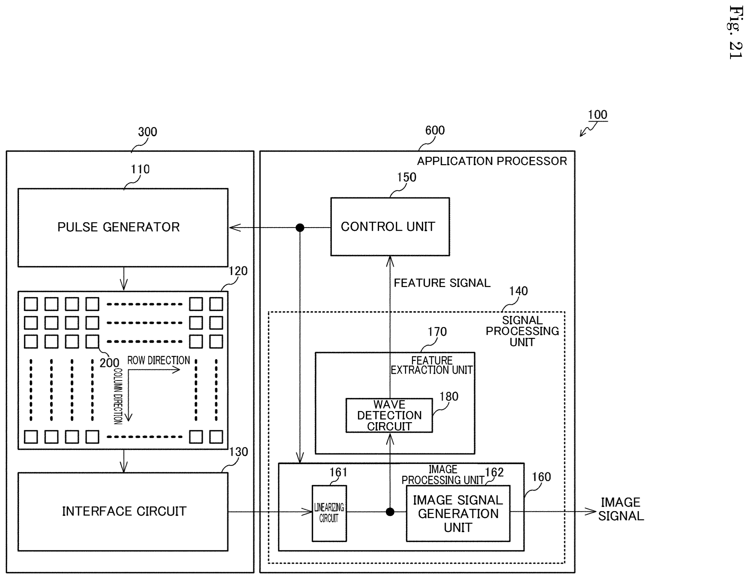

Fig. 21 is a block diagram illustrating a configuration example of a light detection device in an eleventh embodiment of the present technology.

[Fig. 22]

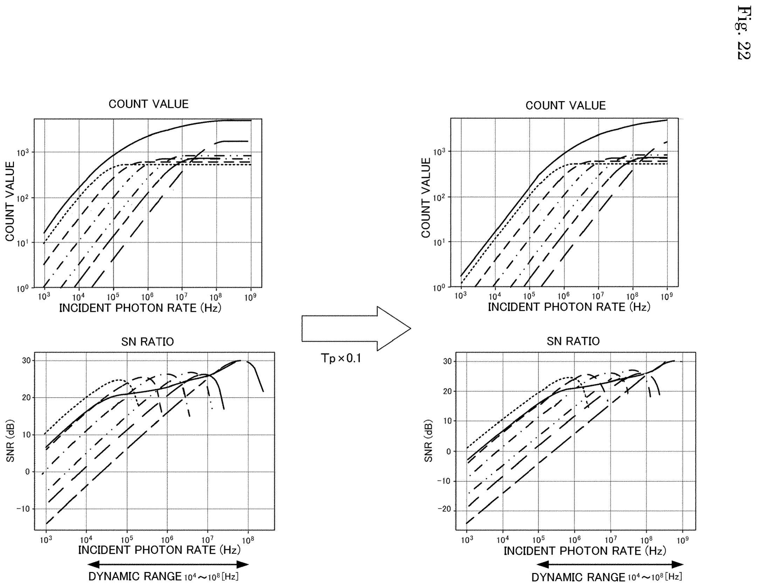

Fig. 22 is an explanatory diagram regarding control of a shutter time in the light detection device in the eleventh embodiment of the present technology.

[Fig. 23]

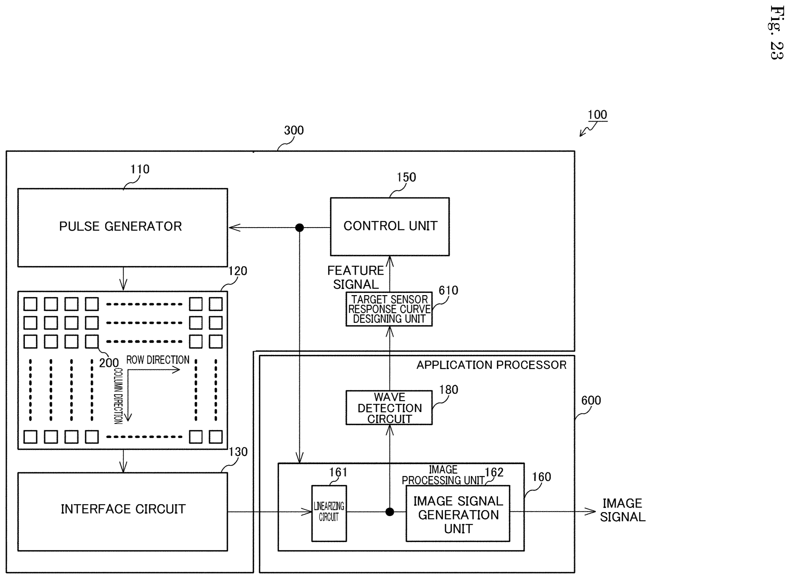

Fig. 23 is a block diagram illustrating a configuration example of a light detection device in a twelfth embodiment of the present technology.

[Fig. 24]

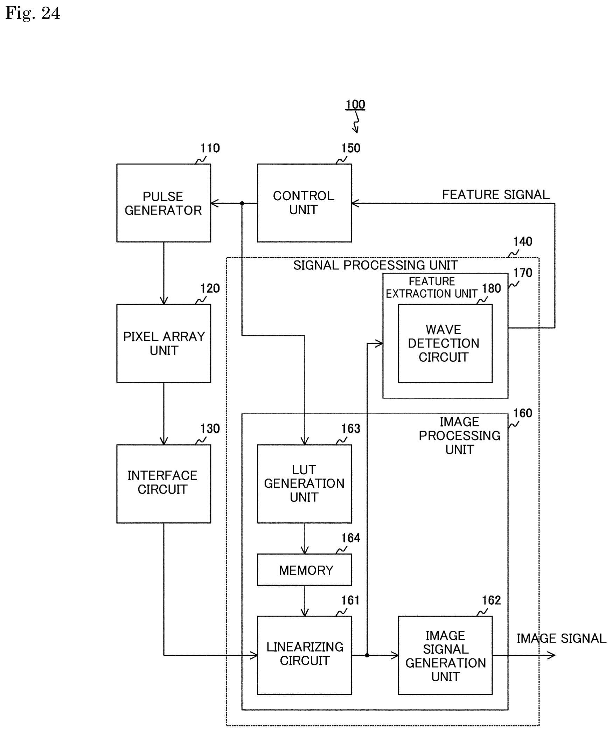

Fig. 24 is a block diagram illustrating a configuration example of a light detection device in a thirteenth embodiment of the present technology.

[Fig. 25]

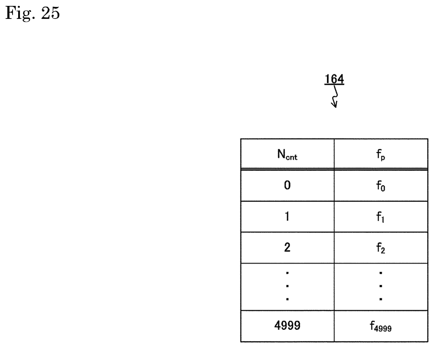

Fig. 25 is a diagram illustrating an example of a lookup table in the thirteenth embodiment of the present technology.
[Fig. 26]

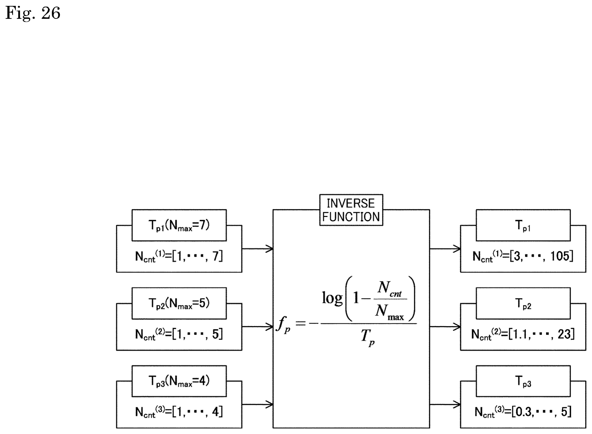

Fig. 26 is a diagram illustrating an example of a photon rate at each detection interval in the thirteenth embodiment of the present technology.
[Fig. 27]

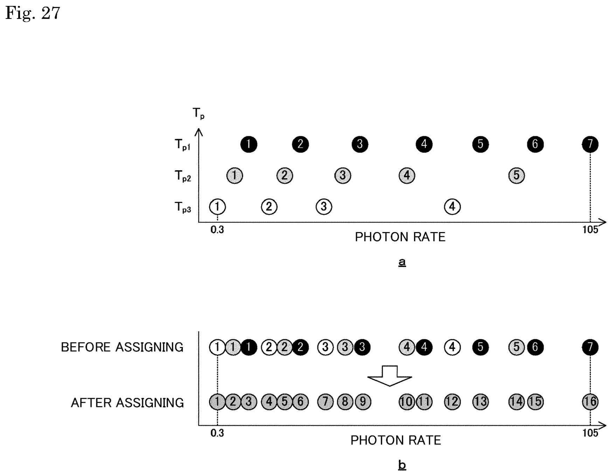

Fig. 27 is a diagram for explaining a method of generating the lookup table in the thirteenth embodiment of the present technology.
[Fig. 28]

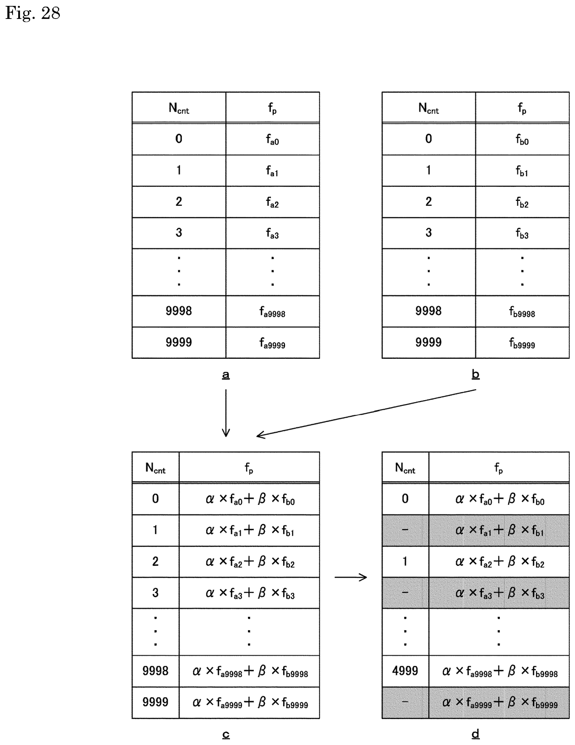

Fig. 28 is a diagram for explaining a method of generating a lookup table in a first modification example of the thirteenth embodiment of the present technology.
[Fig. 29]

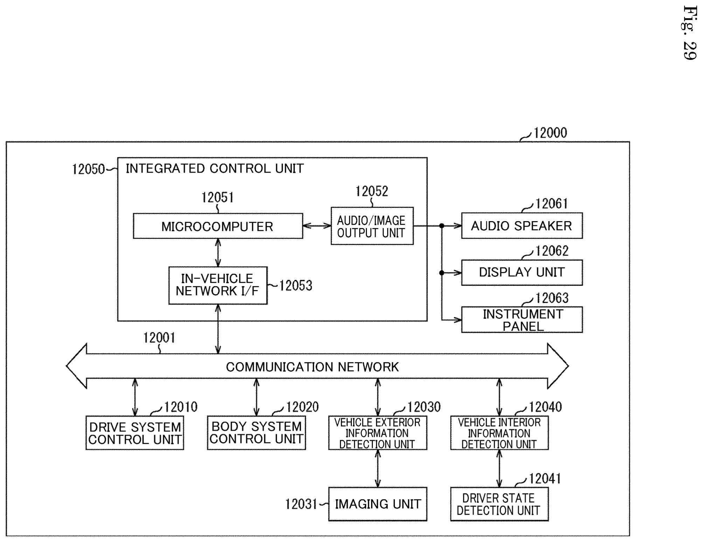

Fig. 29 is a block diagram illustrating a schematic configuration example of a vehicle control system.
[Fig. 30]

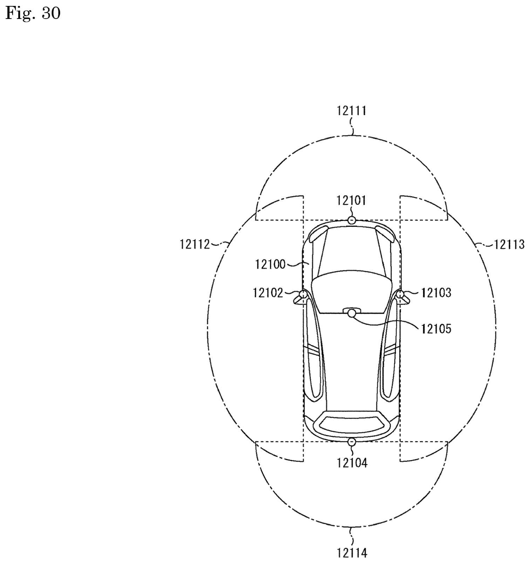

Fig. 30 is an explanatory diagram illustrating an example of a position where an imaging unit is installed.

[Description of Embodiments]

Modes for carrying out the present technique (hereinafter referred to as embodiments) will be described below. Description will be given in the following order.

1. First embodiment (an example in which a feature signal is detected on the basis of a signal of a pixel array unit and setting items of a pulse generator are changed on the basis of the feature signal)
2. Second embodiment (an example in which a feature signal is detected on the basis of an image signal generated by an image processing unit and setting items of a pulse generator are changed on the basis of the feature signal)
3. Third embodiment (an example in which a signal of a pixel array unit is input directly to a feature extraction unit to detect a feature signal, and setting items of a pulse generator are changed on the basis of the feature signal)
4. Fourth embodiment (an example in which setting items of a pulse generator are controlled on the basis of user control performed from outside in addition to the configuration of the first embodiment)
5. Fifth embodiment (a disposition example (1) of components in a light detection device)
6. Sixth embodiment (a disposition example (2) of components in a light detection device)
7. Seventh embodiment (a disposition example (3) of components in a light detection device)
8. Eighth embodiment (a disposition example (4) of components in a light detection device)
9. Ninth embodiment (a disposition example (5) of components in a light detection device)
10. Concerning scheme of performing photon detection at a plurality of detection intervals
11. Tenth embodiment (an example in which priority is placed on gradation and low power consumption by a scheme of performing photon detection at a plurality of detection intervals)
12. Eleventh embodiment (an example in which a shutter time is controlled by a scheme of performing photon detection at a plurality of detection intervals)
13. Twelfth embodiment (an example in which signal statistics obtained through wave detection by an application processor are output to a side of a sensor chip and processing in and after designing of a response curve is performed on the side of the sensor chip)
14. Thirteenth embodiment (an example in which a lookup table is generated using an inverse function)
15. Modification examples
16. Example of application to moving body
17. Configurations adoptable by present technology

<1. First embodiment>

[Configuration example of light detection device]

Fig. 1 is a block diagram illustrating a configuration example of a light detection device 100 in a first embodiment of the present technology. The light detection device 100 in the first embodiment includes a pulse generator 110, a pixel array unit 120, an interface circuit 130, a signal processing unit 140, and a control unit 150.
The pulse generator 110 generates various pulse signals for driving the pixel array unit 120 under control of the control unit 150 and sets a detection interval and the number of times of detection of photons. The pixel array unit 120 is an imaging unit that includes a plurality of reading circuits 200 that performs photoelectric conversion and captures images on the basis of various pulse signals given from the pulse generator 110. The plurality of reading circuits 200 are two-dimensionally disposed in a matrix (array) and output signals in accordance with the number of times of detection of incident photons. The interface circuit 130 supplies a signal of the pixel array unit 120 to the signal processing unit 140.

Note that the signal of the pixel array unit 120 is an example of the result of imaging described in the claims, the pixel array unit 120 and the interface circuit 130 are an example of the output unit described in the claims, and the pulse generator 110 is an example of the setting unit described in the claims.

The signal processing unit 140 is configured to include an image processing unit 160 and a feature extraction unit 170.

The image processing unit 160 includes a linearizing circuit 161 provided in an input stage and an image signal generation unit 162 provided at a stage subsequent thereto. The linearizing circuit 161 converts (linearizes) an input signal of the pixel array unit 120 into a linear signal that is proportional to brightness. In the process of the linearizing, the number of times of detection (count number) of photons is converted into an estimated number of incident photons. The image signal generation unit 162 generates an image signal on the basis of the signal of the pixel array unit 120 linearized by the linearizing circuit 161 and outputs the image signal to outside of the signal processing unit 140.

The feature extraction unit 170 includes a wave detection circuit 180. The wave detection circuit 180 receives the signal of the pixel array unit 120 linearized by the linearizing circuit 161 in the image processing unit 160 as an input and generates a histogram indicating a detection frequency of photons as a frequency on the basis of the signal. An example of the histogram is illustrated in Fig. 2. In the histogram illustrated in Fig. 2, the horizontal axis represents brightness or the frequency (the number of photons in an exposure period) of incident photons, while the vertical axis represents the number of pixels.

The feature extraction unit 170 extracts a feature signal of an output value of the light detection device 100 to determine a feature of an image on the basis of the histogram generated by the wave detection circuit 180. Specifically, the feature extraction unit 170 extracts, as a feature signal, a dynamic range, a maximum value or a minimum value of a horizontal axis of the histogram, an average brightness value, or a median on the basis of the histogram indicating the detection frequency of photons as a frequency, and supplies the extracted feature signal to the control unit 150.

In the histogram illustrated in Fig. 2, the dynamic range is a difference between the minimum value and the maximum value of the horizontal axis, that is, a difference between the minimum number of photons and the maximum number of photons. The average brightness value is an average value of all detection frequencies. The median is a median of the maximum detection frequencies. As for these feature signals such as the dynamic range, the maximum value and the minimum value of the horizontal axis of the histogram, the average brightness value, and the median, the same applies to each of the embodiments described below.

The control unit 150 performs control to change setting information of the pulse generator 110 on the basis of the feature signal supplied from the feature extraction unit 170. Specifically, the control unit 150 performs control to change, as the setting information of the pulse generator 110, at least either the detection interval or the number of times of detection of photons in the reading circuit 200, preferably both the detection interval and the number of times of detection on the basis of the feature signal. The control unit 150 further performs control on the image processing unit 160.

[Configuration example of reading circuit]

Fig. 3 is a block diagram illustrating a configuration example of the reading circuit 200 in the first embodiment of the present technology. The reading circuit 200 in the first embodiment of the present technology includes a pixel circuit 210, a counter 220, and a selection switch 230.

The pixel circuit 210 generates a pulse signal PLS in response to incidence of photons and supplies the pulse signal PLS to the counter 220. The counter 220 counts the number of pulses of the pulse signal PLS and supplies the count value as pixel data to the selection switch 230. The count value of the counter 220 is initialized by a reset signal RST supplied from the pulse generator 110 illustrated in Fig. 1.

The selection switch 230 performs an on (close)/off (open) operation in accordance with a selection signal SEL supplied from the pulse generator 110 illustrated in Fig. 1 and by being brought into an on state, supplies the counted value of the counter 220 as pixel data to the signal processing unit 140 illustrated in Fig. 1.

[Configuration example of pixel circuit]

Fig. 4 is a circuit diagram illustrating a configuration example of the pixel circuit 210 in the first embodiment of the present technology. The pixel circuit 210 in the first embodiment of the present technology includes light detection elements 211, a clip transistor 212, an inverter 213, a recharge transistor 214, and a detection circuit 240. As the clip transistor 212 and the recharge transistor 214, p-channel metal oxide semiconductor (pMOS) transistors, for example, are used. Note that the recharge transistor 214 is an example of the recharge unit described in the claims.

In the pixel circuit 210, among the light detection elements 211, the clip transistor 212, the inverter 213, and the recharge transistor 214, the light detection element 211 is disposed in an array in a substrate that is different from the detection circuit 240. Note that some of the clip transistor 212, the inverter 213, and the recharge transistor 214 may be disposed in the same substrate as that of the light detection elements 211.

As the light detection elements 211, an avalanche photodiodes (APDs) can be used. In a Geiger mode avalanche photodiode, an avalanche phenomenon occurs due to incidence of a single photon if a voltage of equal to or greater than a breakdown voltage is applied between terminals. The avalanche photodiode that multiplies the single photon through the avalanche phenomenon is called a single photon avalanche photodiode (SPAD). Here, an exemplary case where SPAD elements, for example, are used as the light detection elements 211 is illustrated. In other words, the SPAD elements are an example of the light detection elements described in the claims.

Each light detection element 211 has an anode connected to a node of a predetermined potential that is lower than a power supply voltage $V_{DD}$ and a cathode connected to the clip transistor 212. A cathode potential of the light detection element 211 is defined as Vk1.

The clip transistor 212 and the recharge transistor 214 are connected in series between a node of the power supply voltage $V_{DD}$ and the cathode of the light detection element 211 with the recharge transistor 214 located on the side of the power supply voltage $V_{DD}$. A potential of a connection node (hereinafter, referred to as a detection node N1) between the clip transistor 212 and the recharge transistor 214 is defined as Vk2.

A control signal CLIP supplied from the pulse generator 110 is input to a gate of the clip transistor 212. Also, a control signal XRST supplied from the pulse generator 110 is input to a gate of the recharge transistor 214 and the inverter 213.

Note that Fig. 4 illustrates a reading scheme in which the recharge transistor 214 is connected to the cathode of the light detection element 211, a reading scheme in which the recharge transistor 214 is connected to the anode of the light detection element 211 and the node of the power supply voltage $V_{DD}$ is connected to the cathode may also be adopted.

The inverter 213 inverts the logic of the control signal XRST and supplies it to the detection circuit 240.

The detection circuit 240 detects incidence of photons and generates a pulse signal PLS. The detection circuit 240 includes a pMOS transistor 241, an n-channel MOS (nMOS) transistor 242, an inverter 243, and an inverter 244.

The pMOS transistor 241 and the nMOS transistor 242 are connected in series between the node of the power supply voltage $V_{DD}$ and the node of the ground voltage with the pMOS transistor 241 located on the side of the power supply voltage $V_{DD}$. The gate of the pMOS transistor 241 is connected to the detection node N1. An inverted signal of the control signal XRST from the inverter 213 is input to the gate of the nMOS transistor 242. A signal in accordance with a potential of a connection node N2 between the pMOS transistor 241 and the nMOS transistor 242 is defined as a detection signal DET.

The inverter 243 is adapted to invert the logic of the detection signal DET. The inverter 244 inverts the logic of the inverted signal from the inverter 243 and supplies it as a pulse signal PLS to the counter 220 illustrated in Fig. 3.

Also, setting information to control the reading circuit 200 is input from the control unit 150 to the pulse generator 110. The setting information includes a setting value of at least either the detection interval at which incidence of photons is detected or the number of times of detection. Here, the detection interval indicates a cycle at which incidence of photons is detected, and the number of times of detection indicates the number of times the control of the detection interval is repeated. Since the detection of photons is performed over an exposure period, the detection interval × the number of times of detection is the same as the value of the exposure period.

Within the detection interval, the control unit 150 performs control on the pulse generator 110 to set the control signal CLIP at a high level and then set it at a low level. In the period during which the control signal CLIP is at a high level in the detection interval, the detection node N1 is disconnected from the cathode of the light detection element 211. This period will be referred to as a "standby period" for waiting for incidence of photons below. On the other hand, in a period during which the control signal CLIP is at a low level in the detection interval, the detection node N1 is connected to the cathode of the light detection element 211. This period will be referred to as a "connection period" below.

Once photons are incident during the standby period, avalanche multiplication occurs in the light detection element 211, and a cathode potential Vk1 thereof drops to a specific potential. The clip transistor 212 connects the detection node N1 to the light detection element 211 during the subsequent connection period. Therefore, in a case where photons are incident during the standby period, a charge is transferred to the detection node N1 during the connection period, and the pulse signal PLS is set to a high level.

Furthermore, the control unit 150 performs control on the pulse generator 110 to set the control signal XRST at a low level over a predetermined period from a predetermined recharging start timing within the connection period. In this manner, the recharge transistor 214 supplies the power supply voltage $V_{DD}$ to the detection node N1. Since the detection node N1 is connected to the cathode of the light detection element 211, a recharging operation to return the cathode potential Vk1 to the power supply voltage $V_{DD}$ is performed. Also, the detection circuit 240 is initialized by the control signal XRST at a low level.

In short, the clip transistor 212 electrically connects the light detection element 211 to the detection node N1 within the connection period and disconnects the light detection element 211 from the detection N1 within the standby period. Also, the recharge transistor 214 supplies the power supply voltage $V_{DD}$ to the detection node N1 until a predetermined period elapses after the recharging start timing in the connection period.

[Operation example of light receiving unit]

Fig. 5 is a timing chart illustrating an example of an operation of the pixel circuit 210 in the first embodiment of the present technology. Fig. 5 illustrates a timing relationship among the control signal CLIP, the control signal XRST, the cathode potential Vk1, the potential Vk2 of the detection node N1, and the output signal of the inverter 213.

In the initial state, both the cathode potential Vk1 and the potential Vk3 of the detection node are the power supply voltage $V_{DD}$.

In the detection interval from the clock time T0 to the clock time T3, the period until the clock time T1 corresponds to the standby period, while the period from the clock time T1 to the clock time T3 corresponds to the connection period. Within the standby period, the pulse generator 110 sets the control signal CLIP at a high level under control of the control unit 150. Furthermore, the pulse generator 110 sets the control signal XRST at a high level over a specific period of time from a predetermined timing within the standby period.

It is assumed that photons are incident during the standby period from the clock time T0 to the clock time T1. In the drawing, the thick arrow indicates the incidence timing of photons. Avalanche multiplication occurs in the light detection element 211, which is a SPAD element, due to the incidence of photons, the cathode potential Vk1 drops to a specific potential, and the avalanche multiplication stops then. Since the detection node N1 is disconnected from the light detection element 211 during the standby period, the potential Vk2 of the detection node N1 does not fluctuate.

Once the cathode of the light detection element 211 is connected to the detection node N1 at the clock time T1, a part of the charge of the cathode moves to the detection node N1. In this manner, the potential Vk2 of the detection node N1 drops, and the cathode potential Vk1 is raised by the amount corresponding to the moved charge. Once the potential Vk2 of the electric detection node N1 becomes equal to or less than a threshold value of the pMOS transistor 241, the pMOS transistor 241 is brought into an ON state, and the pulse signal PLS rises.

The pulse generator 110 sets the control signal XRST at a low level under control of the control unit 150 over a predetermined period from the clock time T2 within the connection period. In this manner, the power supply voltage $V_{DD}$ is supplied, and the potential Vk2 of the detection node N1 is initialized to the power supply voltage $V_{DD}$. Since the detection node N1 is connected to the cathode of the light detection element 211, the cathode potential Vk1 is also initialized to the power supply voltage $V_{DD}$. At the same time, the detection circuit 240 is initialized, and the pulse signal PLS falls.

As described above, the pixel circuit 210 in the first embodiment of the present technology performs control such that the reading circuit 200 moves on to a detection state of detecting photons during the period from the clock time T1 to the clock time T2 within the connection period and the reading circuit 200 moves on to the recharged state within the period from the clock time T2 to the clock time T3.

It is possible to generate one pulse when photon is incident one or more times during the standby period at every detection interval by repeating the aforementioned control within the detection interval. For example, since photons are not incident during the standby period in the detection interval from the clock time T3 to the clock time T4, no pulse is generated during the connection period. On the other hand, since photon are incident twice in the detection interval from the clock time T4 to the clock time T5, one pulse is generated.

As for the configuration example of the reading circuit 200, the configuration example of the pixel circuit 210, and the operation example of the pixel circuit 210 in the first embodiment of the present technology described above, the same applies to each of embodiments described below.

As described above, the light detection device 100 in the first embodiment of the present technology includes the reading circuit 200 including the pixel circuit 210 that includes the light detection element 211 and the recharge transistor 214 that recharges the light detection element 211, and performs imaging by counting whether or not photons are incident at a defined detection interval. Then, at least either the detection interval or the number of times of detection of photons is controlled on the basis of a result of the imaging. More specifically, a feature signal is detected on the basis of a signal of the pixel array unit 120 which has been converted into a linear signal that is proportional to brightness by the linearizing circuit 161 in the image processing unit 160, and at least either the detection interval or the number of times of detection of photons is controlled on the basis of the feature signal. In this manner, it is possible to achieve proper input/output properties (that is, the property of the number of incident photons - the count value of the counter 220) of the reading circuit 200 and also to achieve an appropriate dynamic range with respect to incident light.

Furthermore, it is possible to reduce the capacity of the cathode in the light detection element 211 by an effect of the clip transistor 212 of establishing connection/disconnection (cut) between the cathode of the light detection element 211, which is an SPAD element, and the detection node N1 in the light detection device 100 in the first embodiment of the present technology. It is thus possible to reduce power consumption.

<2. Second embodiment>

[Configuration example of light detection device]

Fig. 6 is a block diagram illustrating a configuration example of a light detection device 100 in a second embodiment of the present technology.

The light detection device 100 in the first embodiment of the present technology is configured such that the linearizing circuit 161 of the image processing unit 160 inputs the signal of the pixel array unit 120, which has been converted into a linear signal that is proportional to brightness, to the feature extraction unit 170. On the other hand, the light detection device 100 in the second embodiment of the present technology is configured to input an image signal generated by an image signal generation unit 162 in an image processing unit 160 to a feature extraction unit 170.

The image processing unit 160 includes a linearizing circuit 161 and an image signal generation unit 162, and the image signal generation unit 162 generates an image signal on the basis of a signal of a pixel array unit 120, which has been converted into a linear signal that is proportional to brightness by the linearizing circuit 161, and the image processing unit 160 outputs the image signal to outside of a signal processing unit 140.

In the feature extraction unit 170, a wave detection circuit 180 receives, as an input, the image signal generated by the image signal generation unit 162 in the image processing unit 160 and generates a histogram indicating a detection frequency of photons as a frequency on the basis of the pixel signal. Then, the feature extraction unit 170 extracts, as a feature signal, a dynamic range, an average brightness value, or a median on the basis of the histogram generated by the wave detection circuit 180 and supplies the extracted feature signal to the control unit 150.

The control unit 150 performs control to change at least either the detection interval or the number of times of detection of photons in the reading circuit 200, preferably both the detection interval and the number of times of detection as setting information of a pulse generator 110 on the basis of the feature signal supplied from the feature extraction unit 170.

As described above, the light detection device 100 in the second embodiment of the present technology detects the feature signal on the basis of the image signal generated by the image processing unit 160 and controls at least either the detection interval or the number of times of detection of photons on the basis of the feature signal. In this manner, it is possible to achieve proper input/output properties of the reading circuit 200 and also to achieve an appropriate dynamic range with respect to incident light similarly to the first embodiment in which the feature signal is detected on the basis of the signal of the pixel array unit 120, which has been converted into a linear signal that is proportional to brightness by the linearizing circuit 161 in the image processing unit 160.

<3. Third embodiment>

[Configuration example of light detection device]

Fig. 7 is a block diagram illustrating a configuration example of a light detection device 100 in a third embodiment of the present technology.

The light detection device 100 in the third embodiment of the present technology is configured such that a signal of a pixel array unit 120 output from an interface circuit 130 is input directly to a feature extraction unit 170. Accordingly, the feature extraction unit 170 is configured to include a linearizing circuit 190 in a stage before the wave detection circuit 180, that is, an input stage. The linearizing circuit 190 linearizes the input signal of the pixel array unit 120 into a linear signal that is proportional to brightness similarly to the linearizing circuit 161 provided in the image processing unit 160 in the light detection device 100 in the first embodiment of the present technology.

In the feature extraction unit 170, the wave detection circuit 180 generates a histogram indicating a detection frequency of photons as a frequency on the basis of the signal of the pixel array unit 120, which has been converted into a linear signal that is proportional to brightness by the linearizing circuit 190. Then, the feature extraction unit 170 extracts a feature signal of the output value of the light detection device 100 on the basis of the histogram generated by the wave detection circuit 180, and supplies the extracted feature signal to a control unit 150.

The control unit 150 performs control to change at least either the detection interval or the number of times of detection of photons in the reading circuit 200, preferably both the detection interval and the number of times of detection as setting information of a pulse generator 110 on the basis of the feature signal supplied from the feature extraction unit 170.

As described above, the light detection device 100 in the third embodiment of the present technology includes the linearizing circuit 190 in the input stage of the feature extraction unit 170, and the signal of the pixel array unit 120 output from the interface circuit 130 is input directly to the feature extraction unit 170. Also, it is possible to achieve proper input/output properties of the reading circuit 200 and also to achieve an appropriate dynamic range with respect to incident light similarly to the first embodiment by detecting the feature signal on the basis of the signal of the pixel array unit 120, which has been linearized into a linear signal that is proportional to brightness, in the feature extraction unit 170 and controlling at least either the detection interval or the number of times of detection of photons on the basis of the feature signal.

## <4. Fourth embodiment>

[Configuration example of light detection device]

Fig. 8 is a block diagram illustrating a configuration example of a light detection device 100 in a fourth embodiment of the present technology.

The light detection device 100 in the fourth embodiment of the present technology basically adopts the configuration of the light detection device 100 in the first embodiment of the present technology and is also configured to control at least either a detection interval or the number of times of detection of photons by a control unit 150 changing setting information of a pulse generator 110 on the basis of a feature signal detected by a feature extraction unit 170. In addition to this configuration, the light detection device 100 in the fourth embodiment of the present technology is configured such that a control unit 150 controls at least either the detection interval or the number of times of detection of photons on the basis of user control from the outside.

The external control (user control) by the user on the control unit 150 can be performed through a bus such as an inter-integrated circuit (I2C), an improved inter-integrated circuit (I3C), or a serial peripheral interface (SPI), for example.

According to the light detection device 100 in the fourth embodiment of the present technology described above, it is possible to change the setting information of the pulse generator 110 on the basis of the feature signal detected on the basis of a result of imaging and to arbitrarily change the setting information of the pulse generator 110 on the basis of the external control performed by the user.

[Modification example of fourth embodiment]

As a modification example of the fourth embodiment, it is also possible to adopt a system configuration capable of switching a mode of performing manual control based on user control, a mode of performing automatic control based on a result of imaging, and a mode of performing control on the basis of a limitation set by the user and the result of imaging. As a target of the limitation set by the user, it is possible to exemplify a dynamic range, a shutter time, a frame rate, a signal-to-noise ratio (SNR), and a gamma curve property.

## <5. Fifth embodiment>

[Disposition example (1) of components in light detection device]

Fig. 9 is a block diagram illustrating a disposition example of a light detection device 100 in a fifth embodiment of the present technology. The disposition example of the light detection device 100 in the fifth embodiment of the present technology assumes the configuration of the light detection device 100 in the first embodiment of the present technology.

The disposition example of the light detection device 100 in the fifth embodiment of the present technology is configured such that the pulse generator 110, the pixel array unit 120, and the interface circuit 130 are disposed on a sensor chip 300 while the control unit 150, the image processing unit 160, and the feature extraction unit 170 are disposed on an image signal processor (ISP) chip 400 in the light detection device 100 in the first embodiment. Note that the sensor chip 300 is an example of the first chip described in the claims, and the ISP chip 400 is an example of the second chip described in the claims.

In this manner, it is possible to obtain effects and advantages similar to those of the light detection device 100 in the first embodiment of the present technology even in the disposition example (1) in which the image processing unit 160 and the feature extraction unit 170 are disposed on the ISP chip 400. In other words, it is possible to control at least either the detection interval or the number of times of detection of photons on the basis of the feature signal detected on the basis of the result of imaging, to thereby achieve proper input/output properties of the reading circuit 200, and also to achieve an appropriate dynamic range with respect to incident light.

## <6. Sixth embodiment>

[Disposition example (2) of components in light detection device]

Fig. 10 is a block diagram illustrating a disposition example of a light detection device 100 in a sixth embodiment of the present technology. The disposition example of the light detection device 100 in the sixth embodiment of the present technology assumes the configuration of the light detection device 100 in the second embodiment of the present technology.

The disposition example of the light detection device 100 in the sixth embodiment of the present technology is configured such that the pulse generator 110, the pixel array unit 120, and the interface circuit 130 are disposed on a sensor chip 300, the image processing unit 160 is disposed on an ISP chip 400, and the control unit 150 and the feature extraction unit 170 are disposed on a control chip 500, which is different from the ISP chip 400, in the light detection device 100 in the second embodiment of the present technology. Note that the control chip 500 is an example of the third chip described in the claims.

In this manner, it is possible to obtain effects and advantages similar to those of the light detection device 100 in the first embodiment of the present technology even in the disposition example (2) in which the control unit 150 and the feature extraction unit 170 are disposed on the control chip 500, which is a chip different from the ISP chip 400. In other words, it is possible to control at least either the detection interval or the number of times of detection of photons on the basis of the feature signal detected on the basis of the result of imaging, to thereby achieve proper input/output properties of the reading circuit 200, and also to achieve an appropriate dynamic range with respect to incident light.

<7. Seventh embodiment>

[Disposition example (3) of components in light detection device]

Fig. 11 is a block diagram illustrating a disposition example of a light detection device 100 in a seventh embodiment of the present technology. The disposition example of the light detection device 100 in the seventh embodiment of the present technology assumes the configuration of the light detection device 100 in the third embodiment of the present technology.

The disposition example of the light detection device 100 in the seventh embodiment of the present technology is configured such that the control unit 150 and the feature extraction unit 170 are disposed on a sensor chip 300 together with the pulse generator 110, the pixel array unit 120, and the interface circuit 130 while the image processing unit 160 is disposed on an ISP chip 400 in the light detection device 100 in the third embodiment of the present technology.

In this manner, it is possible to obtain effects and advantages similar to those of the light detection device 100 in the first embodiment of the present technology even in the disposition example (3) in which the control unit 150 and the feature extraction unit 170 are disposed on the sensor chip 300 together with the pixel array unit 120. In other words, it is possible to control at least either the detection interval or the number of times of detection of photons on the basis of the feature signal detected on the basis of the result of imaging, to thereby achieve proper input/output properties of the reading circuit 200, and also to achieve an appropriate dynamic range with respect to incident light.

<8. Eighth embodiment>

[Disposition example (4) of components in light detection device]

Fig. 12 is a block diagram illustrating a disposition example of a light detection device 100 in an eighth embodiment of the present technology. The disposition example of the light detection device 100 in the eighth embodiment of the present technology assumes the configuration of the light detection device 100 in the first embodiment of the present technology.

The disposition example of the light detection device 100 in the eighth embodiment of the present technology is configured such that the pulse generator 110, the pixel array unit 120, and the interface circuit 130 are disposed on an sensor chip 300, the image processing unit 160 and the feature extraction unit 170 are disposed on an ISP chip 400, and only the control unit 150 is disposed on a control chip 500 in the light detection device 100 in the first embodiment of the present technology.

In this manner, it is possible to obtain effects and advantages similar to those of the light detection device 100 in the first embodiment of the present technology even in the disposition example (4) in which the control unit 150 is disposed on the control chip 500 that is different from the sensor chip 300 and the ISP chip 400. In other words, it is possible to control at least either the detection interval or the number of times of detection of photons on the basis of the feature signal detected on the basis of the result of imaging, to thereby achieve proper input/output properties of the reading circuit 200, and also to achieve an appropriate dynamic range with respect to incident light.

<9. Ninth embodiment>

[Disposition example (5) of components in light detection device]

Fig. 13 is a block diagram illustrating a disposition example of a light detection device 100 in a ninth embodiment of the present technology. The disposition example of the light detection device 100 in the ninth embodiment of the present technology assumes the configuration of the light detection device 100 in the first embodiment of the present technology.

The disposition example of the light detection device 100 in the ninth embodiment is configured such that the control unit 150 is disposed on a sensor chip 300 together with the pulse generator 110, the pixel array unit 120, and the interface circuit 130 while the image processing unit 160 and the feature extraction unit 170 are disposed on an ISP chip 400 in the light detection device 100 in the first embodiment of the present technology.

In this manner, it is possible to obtain effects and advantages similar to those of the light detection device 100 in the first embodiment of the present technology even in the disposition example (5) in which the control unit 150 is disposed on the sensor chip 300 together with the pixel array unit 120. In other words, it is possible to control at least either the detection interval or the number of times of detection of photons on the basis of the feature signal detected on the basis of the result of imaging, to thereby achieve proper input/output properties of the reading circuit 200, and also to achieve an appropriate dynamic range with respect to incident light.

<10. Concerning scheme of performing photon detection at plurality of detection intervals>

In the pixel circuit that detects rising caused by avalanche multiplication and performs resetting at a specific interval by a control signal supplied from outside, a brightness range in which the count value of the counter has gradation is limited by the detection interval of photons. On the other hand, it is possible to realize imaging in a high dynamic range of a widened brightness range in which the number of times of detection (the count value of the counter) of photons has gradation and imaging by which gradation in a specific brightness range is raised by adopting the scheme of detecting photons (counting photons) at a plurality of detection intervals. Here, the brightness range is a dynamic range of brightness and is a range from the darkest place to the brightest place in an entire image.

[Short detection interval for high brightness and long detection interval for low brightness]

Hereinafter, a scheme of detecting photons at a plurality of detection intervals will be specifically described using Fig. 14. Here, a case of two detection intervals, namely a relatively long detection interval and a relatively short detection interval will be described as an example of the plurality of detection intervals. Fig. 14 is an explanatory diagram of the detection intervals of photons required to image scenes with high brightness and low brightness.

The relatively long photon detection interval and the relatively short photon detection interval configure one imaging frame. The count value (count number) is incremented to "1" by one or more photons being incident in one detection interval. The count value is "1" even if a plurality of photons are incident within one detection interval.

In imaging of a scene with relatively low brightness (low brightness), a frequency at which photons are incident is low. Therefore, it is possible to prevent missing of counting of the photons by using the relatively long photon detection interval for the low brightness. On the contrary, in imaging of a scene with relatively high brightness (high brightness), photons are incident at a high frequency, and the count value is thus saturated if the relatively long photon detection interval is adopted. Therefore, since it is possible to count the photons while performing thinning-out by using the relatively short photon detection interval for the high brightness, it is possible to prevent the count value from being saturated.

As is apparent from the above description, the relatively short photon detection interval is needed for the imaging of the scene with the relatively high brightness, while the relatively long photon detection interval is needed for the imaging of the scene with the relatively low brightness.

The diagram in the lower section in Fig. 14 illustrates input/output properties, where the horizontal axis represents an incident photon rate that is proportional to brightness while the vertical axis represents a count value. Here, the case of the relatively long photon detection interval (for example, 1000 [nsec] $\times$ 5000 [cnt]) is indicated by the solid line curve, while the case of the relatively short photon detection interval (for example, 10 [nsec] $\times$ 5000 [cnt]) is indicated by the dotted-line curve.

In the input / output properties, a part where the curve has gradation corresponds to the dynamic range. As is apparent from the input/output properties, it is possible to secure the dynamic range only in the part with the relatively low brightness or to secure the dynamic range only in the part with the relatively high brightness if only the relatively long detection interval or only the relatively short detection interval is used.

[Combination of long and short detection intervals]

Therefore, the relatively long photon detection interval and the relatively short photon detection interval are used in combination. It is possible to have gradation in a wide brightness range by combining the long and short photon detection intervals in this manner and to thereby realize a high dynamic range.

Fig. 15 is an explanatory diagram of the combination of the long and short photon detection intervals. The drawing in the lower section in Fig. 15 illustrates input/output properties, where the horizontal axis represents an incident photon rate while the vertical axis represents a count value. Here, the case of the relatively long photon detection interval (for example, 1000 [nsec] × 5000 [cnt]) is indicated by the solid line curve, and the case of the relatively short photon detection interval (for example, 10 [nsec] × 5000 [cnt]) is indicated by the dotted-line curve.

Also, the property in the case where the long and short detection intervals are combined are indicated by the dashed-line curve. The property achieved by the combination of the long and short detection intervals is, for example, a property in a case where 10 [nsec] × 1666 [cnt] + 100 [nsec] × 1666 [cnt] + 1000 [nsec] × 1666 [cnt], and 10 [nsec]: 100 [nsec]: 1000 [nsec] = 1: 1: 1.

As is apparent from the input/output properties in Fig. 15, it is possible to appropriately detect (count) photons with respect to any brightness by using the relatively long detection interval and the relatively short interval in combination, to have gradation in a wide brightness range, and to thereby realize a high dynamic range.

[Gradation control for each level of brightness]

In addition to the combination of the long and short detection intervals, it is also possible to change the blending ratio of the numbers of times of detection (count numbers) at each of the long and short detection intervals. It is possible to control gradation for each level of brightness by changing the blending ratio of the numbers of times of detection at each of the long and short detection intervals in this manner.

Fig. 16 is an explanatory diagram of gradation control for each level of brightness. Fig. 16 illustrates input/output properties, where the horizontal axis represents an incident photon rate while the vertical axis represents a count value. In the input/output properties, the case of the relatively long detection interval is indicated by the solid line curve, the case of the relatively short detection interval is indicated by the dotted-line curve, and the case of the combination of the long and short detection intervals is indicted by the dashed line.

Here, as an example, the relatively long detection interval is set to 10 [nsec] × 500 [cnt]+ 100 [nsec] × 4000 [cnt] + 1000 [nsec] × 500 [cnt]), the relatively short detection interval is set to 10 [nsec] × 4000 [cnt] + 100 [nsec] × 500 [cnt] + 1000 [nsec] × 500 [cnt]), and the combination of the long and short detection intervals is set to 10 [nsec] × 500 [cnt]+ 100 [nsec] × 500 [cnt] + 1000 [nsec] × 4000 [cnt]).

As described above, it is possible to control gradation at each level of brightness by changing the blending ratio of the numbers of times of detection (count numbers) at each of the long and short detection intervals. For example, control is performed such that the number of times of detection at the relatively short detection interval is increased in a case where it is desired to obtain gradation on the side of the relatively high brightness while the number of times of detection at the relatively long detection interval is increased in a case where it is desired to obtain gradation on the side of the relatively low brightness. In this manner, gradation in the corresponding brightness region increases, and it is thus possible to improve an SNR.

<11. Tenth embodiment>

A tenth embodiment of the present technology is an example in which priority is placed on gradation and low power consumption in a scheme of performing photon detection at a plurality of detection intervals. Furthermore, the tenth embodiment of the present technology is also an example in which the entire processing from wave detection of a signal of a pixel array unit 120 to control of at least either a detection interval or the number of times of detection of photons based on a result of the wave detection is performed on a side of an application processor, which will be described later.

[Configuration example of light detection device]

Fig. 17 is a block diagram illustrating a configuration example of a light detection device 100 in a tenth embodiment of the present technology.

In the light detection device 100 in the tenth embodiment of the present technology, a pulse generator 110, a pixel array unit 120, and an interface circuit 130 are disposed on a sensor chip 300 in a configuration including the pulse generator 110, the pixel array unit 120, the interface circuit 130, a signal processing unit 140, and a control unit 150. Also, the signal processing unit 140 including an image processing unit 160 and a feature extraction unit 170 and a control unit 150 configure an application processor 600.

In the application processor 600, a feature extraction unit 170 includes a wave detection circuit 180 and a target sensor response curve designing unit 610.

The wave detection circuit 180 generates a histogram indicating a detection frequency of photons as a frequency on the basis of a signal of the pixel array unit 120, which has been linearized into a linear signal that is proportional to brightness by a linearizing circuit 161 in the image processing unit 160, and creates frequency distribution (brightness distribution) of photon rates from the histogram.

The target sensor response curve designing unit 610 creates a sensor response curve that is a target on the basis of the frequency distribution of the photon rates created by the wave detection circuit 180 and supplies information of the sensor response curve that is a target as a feature signal to the control unit 150.

Once the control unit 150 receives the information of the sensor response curve that is a target from the target sensor response curve designing unit 610, the control unit 150 estimates a detection interval $T_p$ of photons realizing the sensor response curve and a count value (count number) $N_{max}$ at a certain photon detection interval. In other words, the control unit 150 has a function of calculating the detection interval $T_p$ and the count value (the number of times of detection of photons) $N_{max}$ of photons. Note that the total maximum count value N is N = $\Sigma N_{max}$.

The control unit 150 controls at least either the detection interval or the number of times of detection of photons by giving the estimated detection interval $T_p$ of photons and the count value $N_{max}$ at the certain detection interval of photons to the pulse generator 110.

As described above, the application processor 600 including the image processing unit 160, the feature extraction unit 170, and the control unit 150 detects a feature signal in a result of imaging performed by the pixel array unit 120 and outputs a signal to control at least either the detection interval or the number of times of detection of photons by the light detection element 211 on the basis of the feature signal.

Subsequently, a flow of control in two gradation priority modes (1) and (2) in the light detection device 100 in the tenth embodiment of the present technology and a low power consumption priority mode will be described.

[Gradation priority mode (1)]

Fig. 18 is a diagram illustrating a flow of control in the gradation priority mode (1) in the light detection device 100 in the tenth embodiment of the present technology.

In Fig. 18, a represents an entire image of a certain scene. The wave detection circuit 180 creates frequency distribution of photon rates from a histogram indicating the detection frequency of photons as a frequency. The frequency distribution of the photon rates is illustrated in b in Fig. 18. The target sensor response curve designing unit 610 creates the sensor response curve that is a target on the basis of the frequency distribution of photon rates. Specifically, the target sensor response curve designing unit 610 creates the sensor response curve in which inclination of the count value is large where the frequency distribution of the photon rates is high while the inclination of the count value is small where the frequency distribution is low. The sensor response curve that is a target is illustrated in c in Fig. 18. Then, the control unit 150 estimates the detection interval $T_p$ of photons realizing the sensor response curve that is a target and the count value $N_{max}$ at a certain detection interval of photons as illustrated in d in Fig. 18.

As described above, control is performed such that gradation is increased with a brightness range in which frequency distribution is high, that is, such that the gradation of the count value (the number of times of detection) of photons is maximized with respect to brightness distribution of the scene with reference to the histogram of the brightness distribution (frequency distribution of photon rates) of the entire image of the certain scene under control of the control unit 150 illustrated in Fig. 17 in the gradation priority mode (1). It is possible to appropriately control the detection interval of photons and the count value of photons with respect to the brightness distribution of the scene by performing control while priority is placed on the gradation of the count value of photons, and to thereby maximize the information of the scene.

[Gradation priority mode (2)]

In the above-mentioned gradation priority mode (1), control is performed to maximize the gradation of the count value (the number of times of detection) of photons with respect to the brightness distribution in the entire image of the certain scene. On the contrary, control is performed to maximize gradation of the count value (the number of times of detection) of photons with respect to brightness distribution of a subject that is a target in the gradation priority mode (2).

Fig. 19 is a diagram illustrating a flow of control in the gradation priority mode (2) in the light detection device 100 in the tenth embodiment of the present technology.

In Fig. 19, a represents a region (dashed line frame) of the subject that is a target. The wave detection circuit 180 creates frequency distribution of photon rates from a histogram indicating the detection frequency of photons as a frequency. Specifically, frequency distribution of the photon rates weighted in the region of the subject that is a target is created. The frequency distribution of the photon rates is illustrated in b in Fig. 19. The target sensor response curve designing unit 610 creates the sensor response curve that is a target on the basis of the frequency distribution of photon rates. Specifically, the target sensor response curve designing unit 610 creates the sensor response curve in which inclination of the count value is large where the frequency distribution of the photon rates is high while the inclination of the count value is small where the frequency distribution is low. The sensor response curve that is a target is illustrated in c in Fig. 19. Then, the control unit 150 estimates the detection interval $T_p$ of photons realizing the sensor response curve that is a target and the count value $N_{max}$ at a certain detection interval of photons as illustrated in d in Fig. 19.

As described above, in the gradation priority mode (2), control is performed to maximize the gradation of the count value (the number of times of detection) of photons with respect to the brightness distribution with reference to the histogram of the brightness distribution (frequency distribution of the photon rate) in the region of the subject that is a target under control of the control unit 150 illustrated in Fig. 17. It is possible to appropriately control the detection interval of photons and the count value of photons with respect to the brightness distribution of the subject that is a target by performing control while priority is placed on the gradation of the count value of photons in this manner, and to thereby maximize information of the subject.

[Low power consumption priority mode]

If the count number at a certain detection interval of photons is increased, gradation in a corresponding brightness region increases and an SNR is improved, while the power consumption increases due to the increase in the count value of the counter 220. In other words, the SNR and power consumption are in a trade-off relationship. Therefore, in the low power consumption priority mode, control is performed to minimize the count value of the counter 220 within a range of not falling short of the SNR required at minimum within the brightness range of the scene under control of the control unit 150 illustrated in Fig. 17.

Fig. 20 is an explanatory diagram of the low power consumption priority mode of the light detection device 100 in the tenth embodiment of the present technology.

The SNR curve for a single detection interval is represented by the following expression.

[Math. 1]

$$ SNR = \frac{-f_p T_p}{\log\left(1 - \sqrt{(e^{f_p T_p} - 1)/N_{max}}\right)} \quad \cdots \text{Expression 1} $$

In the above expression, $f_p$ denotes an incident photon rate, $T_p$ denotes a detection interval of photons, and $N_{max}$ denotes the number of times of detection (the count value of the counter) of photons.

In Fig. 20, in Fig. 20 that illustrates SNR curves at a plurality of detection intervals $T_p$, the large one-dotted chain line indicates an SNR curve at $T_p$ = 25 [nsec], the large dashed line indicates an SNR curve at $T_p$ = 100 [nsec], the two-dotted chain line indicates an SNR curve at $T_p$ = 400 [nsec], the small one-dotted chain line indicates an SNR curve at $T_p$ = 1600 [nsec], the small dashed line indicates an SNR curve at $T_p$ = 6400 [nsec], and the dotted line indicates an SNR curve at $T_p$ = 25600 [nsec], The solid line indicates a multiple-exposure mode.

In the low power consumption priority mode of the light detection device 100 in the tenth embodiment of the present technology, control is performed to minimize the count value (the number of times of detection of photons) of the counter 220 within a range of not falling short of the SNR required as a minimum within the brightness range of the scene when the SNR curves at the plurality of detection intervals $T_p$ are plotted under control of the control unit 150 illustrated in Fig. 17. It is thus possible to curb power consumption of the light detection device 100. In the example illustrated in Fig. 20, the SNR required at minimum within the brightness range of the scene is assumed to be 25 [dB].

<12. Eleventh embodiment>

An eleventh embodiment of the present technology is an example of controlling a shutter time in a scheme of performing photon detection at a plurality of detection intervals. In the shutter time control mode, control is performed to shift only a dynamic range with a sensor response curve (gradation), which is a target and is created on the basis of a frequency distribution of a photon rate, fixed.

[Configuration example of light detection device]

Fig. 21 is a block diagram illustrating a configuration example of a light detection device 100 in the eleventh embodiment of the present technology.

In the light detection device 100 in the eleventh embodiment of the present technology, a pulse generator 110, a pixel array unit 120, and an interface circuit 130 are disposed on a sensor chip 300 in a configuration including the pulse generator 110, the pixel array unit 120, the interface circuit 130, a signal processing unit 140, and a control unit 150. Also, the signal processing unit 140 including an image processing unit 160 and a feature extraction unit 170 and a control unit 150 configure an application processor 600.

In a shutter time control mode in the eleventh embodiment of the present technology, the feature extraction unit 170 includes only a wave detection circuit 180 in the application processor 600 by the gradation (the shape of the sensor response curve) being fixed. In other words, the eleventh embodiment is configured such that the target sensor response curve designing unit 610, which is disposed in the feature extraction unit 170 in the tenth embodiment, is not needed. In this manner, it is possible to simplify the configuration of the application processor 600 in the eleventh embodiment as compared with the tenth embodiment by the amount corresponding to the target sensor response curve designing unit 610 regarded as being not necessary.

The wave detection circuit 180 creates a histogram indicating a detection frequency of photons as a frequency on the basis of a signal of the pixel array unit 120, which has been linearized into a linear signal that is proportional to brightness by a linearizing circuit 161 in the image processing unit 160, and creates frequency distribution (brightness distribution) of the photon rates as signal statistics from the histogram. Then, the wave detection circuit 180 then supplies the signal statistics after the wave detection as a feature signal to the control unit 150.

Once the control unit 150 receives the frequency distribution of the photon rate as the feature signal from the wave detection circuit 180, the control unit 150 estimates a detection interval $T_p$ of photons realizing a fixed sensor response curve and a count value (count number) $N_{max}$ at a certain detection interval of photons. In other words, the control unit 150 has a function of calculating the detection interval $T_p$ and the count value (the number of times of detection of photons) $N_{max}$ of photons.

Then, the control unit 150 performs control of uniformly multiplying all the detection intervals $T_p$ of photons by n. The count value and the SNR property with respect to an input photon rate before all the detection intervals $T_p$ of photons are uniformly multiplied by n (for example, n = 0.1) are illustrated on the left side in Fig. 22, while the count value and the SNR property with respect to the input photon rate after all the detection intervals $T_p$ of photons are uniformly multiplied by n are illustrated on the right side in the drawing.

In the shutter time control mode in the eleventh embodiment of the present technology, the plurality of detection intervals $T_p$ are set to 25 [nsec] (the large one-dotted chain line in the drawing), 100 [nsec] (the large dashed line), 400 [nsec] (two-dotted chain line), 1600 [nsec] (the small one-dotted chain line), 6400 [nsec] (the small dashed line), and 25600 [nsec] (the dotted line), which are the same as those in the low power consumption priority mode in the tenth embodiment of the present technology in this regard.

Once all the detection interval $T_p$ of photons are uniformly multiplied by n under control of the control unit 150, the dynamic range of the input photon rate is shifted by 1/n times. For example, if all the detection intervals $T_p$ of photons are uniformly multiplied by 0.1 times, the dynamic range of the input photon rate is shifted from $10^4$ to $10^8$ [Hz] to $10^5$ to $10^9$ [Hz] as illustrated in Fig. 22.

As described above, control is performed to shift only the dynamic range without changing the shape of the sensor response curve created on the basis of the frequency distribution of the photon rate created by the wave detection circuit 180 in the shutter time control mode in the eleventh embodiment of the present technology. It is thus possible to shift only the dynamic range with the gradation fixed by not changing the shape of the sensor response curve.

<13. Twelfth embodiment>

The afore-mentioned tenth embodiment of the present technology is an example in which the entire processing from the wave detection of the signal of the pixel array unit 120 to the control of at least either the detection interval or the number of times of detection of photons based on the result of the wave detection is performed on the side of the application processor 600. On the other hand, the twelfth embodiment of the present technology is a modification example of the tenth embodiment of the present technology, and is an example in which signal statistics obtained through wave detection by an application processor 600 is output to a side of a sensor chip 300 and the processing in and after designing of a response curve is performed on the side of the sensor chip 300.

[Configuration example of light detection device]

Fig. 23 is a block diagram illustrating a configuration example of a light detection device 100 in the twelfth embodiment of the present technology.

In the light detection device 100 in the twelfth embodiment of the present technology, an image processing unit 160 and a wave detection circuit 180 configures the application processor 600 in a configuration including a pulse generator 110, a pixel array unit 120, an interface circuit 130, the image processing unit 160, the wave detection circuit 180, a target sensor response curve designing unit 610, and a control unit 150. Also, the pulse generator 110, the pixel array unit 120, the interface circuit 130, the target sensor response curve designing unit 610, and the control unit 150 are disposed on the side of a sensor chip 300.

As described above, the light detection device 100 in the twelfth embodiment of the present technology is configured such that the signal statistics after wave detection by the wave detection circuit 180 in the application processor 600 are output to the side of the sensor chip 300 and the processing in and after designing of the sensor response curve in the target sensor response curve designing unit 610 is performed on the side of the sensor chip 300. It is possible to perform processing similar to that in the two gradation priority modes (1) and (2) and the low power consumption priority mode in the twelfth embodiment of the present technology with this configuration as well.

Note that although the twelfth embodiment of the present technology has been described as a modification example of the tenth embodiment of the present technology here, it is also possible to configure the twelfth embodiment as a modification example of the eleventh embodiment of the present technology. In the case of the modification example, a configuration in which the target sensor response curve designing unit 610 in Fig. 23 is deleted is adopted.

<14. Thirteenth embodiment>

In the first embodiment described above, the linearizing circuit 161 linearizes a signal from the pixel array unit 120. With this configuration, a response property of the pixel array unit 120 also changes if the control unit 150 tries to control the detection interval or the number of times of detection in accordance with a scene to be imaged. For this reason, an inverse function of the function indicating the response property is needed in order to perform linearizing in accordance with the scene. A light detection device 100 in a thirteenth embodiment is different from that in the first embodiment in that a lookup table is generated using an inverse function.

Fig. 24 is a block diagram illustrating a configuration example of the light detection device 100 according to the thirteenth embodiment of the present technology. The light detection device 100 in the thirteenth embodiment is different from that in the first embodiment in that a lookup table generation unit 163 and a memory 164 are further disposed inside an image processing unit 160.

The lookup table generation unit 163 is adapted to create a lookup table in which a count value $N_{cnt}$ of photons from the pixel array unit 120 and a photon rate $f_p$ are associated on the basis of a detection interval $T_p$ and the number of times of detection set by the control unit 150. Here, a response property of the pixel array unit 120 with respect to incidence of photons is non-linear as illustrated as an example in Fig. 14. A function indicating the response property can be represented by the following expression, for example.

[Math. 2]

$$N_{cnt} = (1 - e^{(-T_p \times f_p)}) \times N_{max} \qquad \cdots \text{Expression 2}$$

In the above expression, $N_{max}$ is the total count number and is a value obtained by subtracting "1" from the setting value of the number of times of detection in a case where counting is started from "0".

The inverted function in Expression 2 is represented by the following expression.

[Math. 3]

$$f_p = -\frac{\log\left(1 - \dfrac{N_{cnt}}{N_{max}}\right)}{T_p} \qquad \cdots \text{Expression 3}$$

The lookup table generation unit 163 calculates the photon rate $f_p$ for each count value $N_{cnt}$ using Expression 3, generates a lookup table in which the values are associated, and causes the memory 164 to hold the lookup table. The linearizing circuit 161 acquires the photon rate $f_p$ corresponding to the count value $N_{cnt}$ with reference to the lookup table held in the memory 164 and supplies the photon rate $f_p$ to the feature extraction unit 170 and the image signal generation unit 162. Linearizing is thus realized.

Fig. 25 is a diagram illustrating an example of a lookup table in the thirteenth embodiment of the present technology. In a case where "5000" is set as the number of times of detection, for example, the range of the count value $N_{cnt}$ is from "0" to "4999". The lookup table generation unit 163 substitutes each of "0" to "4999", the total count number $N_{max}$ (4999 in this case), and the set detection interval $T_p$ to Expression 3 and calculates the photon rates $f_p$ of the values from "$f_0$" to "$f_{4999}$". Then, the lookup table generation unit 163 causes the memory 164 to hold the lookup table in which the count values and the photon rates are associated.

Although the case where only one detection interval $T_p$ is set is assumed in the drawing, the control unit 150 can set a plurality of detection intervals for the purpose of enlarging the dynamic range or the like as described above. An example of a method of generating a lookup table in a case where a plurality of detection intervals are set will be described with reference to Figs. 26 and 27.

As illustrated as an example in Fig. 26, it is assumed that three mutually different detection intervals $T_{p1}$, $T_{p2}$, and $T_{p3}$ are set, for example. Also, it is assumed that "8", "6", and "5" are set as the numbers of times of detection corresponding to the detection intervals $T_{p1}$, $T_{p2}$, and $T_{p3}$.

The range of the count value $N_{cnt}^{(1)}$ corresponding to the detection interval $T_{p1}$ is from "0" to "7", and the range of the count value $N_{cnt}^{(2)}$ corresponding to the detection interval $T_{p2}$ is from "0" to "5". The range of the count value $N_{cnt}^{(3)}$

corresponding to the detection interval $T_{p3}$ is from "0" to "4". The photon rate when the count value is "0" is "0" regardless of the detection interval by Expression 3. Therefore, the lookup table generation unit 163 calculates the photon rate using an inverse function of Expression 3 for each of the count values of and after "1" for each detection interval.

As illustrated as an example in the drawing, "3" to "105" are calculated as the photon rates $fp^{(1)}$ corresponding to the detection interval $T_{p1}$, and "1.1" to "23" are calculated as the photon rates $fp^{(2)}$ corresponding to the detection interval $T_{p2}$. Also, "0.3" to "5" are calculated as the photon rates $fp^{(3)}$ corresponding to the detection interval $T_{p3}$.

In Fig. 27, a illustrates an example of a photon rate for each detection interval. In a in the drawing, the vertical axis represents a detection interval, while the horizontal axis represents a photon rate. Also, the black dots indicate calculated values of the photon rates $fp^{(1)}$, and the gray dots indicate calculated values of the photon rates $fp^{(2)}$. The while dots indicate calculated values of the photon rates $fp^{(3)}$. The numerical values in the circles indicate the corresponding count values.

As illustrated as an example in b in the drawing, the lookup table generation unit 163 sorts a group of the calculated photon rates for each detection interval in accordance with a predetermined rule (for example, in an ascending order). A group $f_p{}^{cat}$ of the photon rates before the sorting is represented by the following expression, for example.

[Math. 4]

$$f_p{}^{cat} = Concat(f_p{}^{(1)}, f_p{}^{(2)}, f_p{}^{(3)}) = [3, \cdots, 105, 1.1, \cdots, 23, 0.3, \cdots, 5] \cdots \text{Expression 4}$$

In the above expression, a group from 0.3 to 105 corresponds to $f_p{}^{(1)}$, and a group from 1.1 to 23 corresponds to $f_p{}^{(2)}$. A group from 0.3 to 5 corresponds to $f_p{}^{(3)}$.

The group of the photon rates fp after the sorting is represented by the following expression, for example.

[Math. 5]

$$f_p = Sort(f_p{}^{cat}) = [3, \cdots, 1.1, \cdots, 3, \cdots, 5, \cdots, 23, \cdots, 105] \qquad \cdots \text{Expression 5}$$

Then, the lookup table generation unit 163 assigns a new count value to each of the sorted photon rates.

Since the total number of calculated values of the photon rates is 16 in this example, the count values from "1" to "16" are assigned. For example, the minimum value of the photon rates in Expression 5 is "0.3", and the count value "1" is thus assigned to the value. Also, the maximum value of the photon rates in Expression 5 is "105", and the count value "16" is thus assigned to the value. The lookup table generation unit 163 generates a lookup table in which the count values and the photon rates are associated. However, since errors are included as they are, it is preferable to correct the values of the photon rates by the Newton's method.

In a case where correction is performed by the Newton's method, the calculated value of Expression 5 is used as an initial value $f_{p\_0}$, for example. Also, the following function f(x) is defined on the basis of Expression 2.

[Math. 6]

$$f(x) = \sum_{i=1}^{I} (1 - e^{-T_p{}^{(i)}x}) N^{(i)}{}_{max} - N_{cnt} \qquad \cdots \text{Expression 6}$$

In the above expression, I is an integer indicating the number of set detection intervals, and is "3" in the example of Expression 4.

The following expression is obtained by differentiation of Expression 6.

[Math. 7]

$$f'(x) = \sum_{i=1}^{I} T_p{}^{(i)} N^{(i)}{}_{max} e^{-T_p{}^{(i)}x} \qquad \cdots \text{Expression 7}$$

Then, the lookup table generation unit 163 repeats the following expression until t becomes a predetermined value ("2", for example) for each count value to thereby obtain a convergence value.

[Math. 8]

$$f_{p\_t+1} = f_{p\_t} - \frac{f(f_{p\_t})}{f'(f_{p\_t})} \qquad \cdots \text{Expression 8}$$

In the above expression, the value of Expression 5 is used as the initial value $f_{p\_0}$ when t is "0".

The lookup table generation unit 163 uses the convergence value obtained by Expression 8 as a photon rate after the correction for each count value and updates the lookup table with the value.

As described above, according to the thirteenth embodiment of the present technology, the lookup table generation unit 163 generates the lookup table using the inverse function, and the linearizing circuit 161 can thus appropriately perform linearizing in accordance with a scene with reference to the table.

[Modification examples of thirteenth embodiment]

Although the lookup table generation unit 163 calculates and sorts photon rates for each detection interval and assigns count values when a plurality of detection intervals are set in the above mentioned thirteenth embodiment, it is desirable to further reduce the amount of calculation. The light detection device in the modification example of the thirteenth embodiment is different from that in the first embodiment in that a plurality of lookup tables created in advance are combined.

Fig. 28 is a diagram for explaining a method of generating a lookup table in the modification example of the thirteenth embodiment of the present technology. A plurality of lookup tables of different detection intervals generated in advance are stored as combination source lookup tables in the memory 164. In the drawing, a illustrates an example of a combination source lookup table when a detection interval Ta and the number of times of detection "10000" are set. In the table, photon rates corresponding to count values from "0" to "9999" are defined as $f_{a0}$ to $f_{a9999}$.

In the drawing, b illustrates an example of a combination source lookup table when a detection interval Tb and the number of times of detection "10000" are set. In the table, photon rates corresponding to count values from "0" to "9999" are defined as $f_{b0}$ to $f_{b9999}$. Note that the number of combination source lookup tables in the memory 164 is not limited to two and may be three or more.

Once the control unit 150 sets the detection interval and the number of times of detection, the lookup table generation unit 163 reads the plurality of combination source lookup tables of detection intervals that is close to a set detection interval from the memory 164. Then, the lookup table generation unit 163 generates a new lookup table through weighted addition of the photon rates thereof as a combination destination lookup table. For example, it is assumed that the detection interval set at the time of imaging is Tc and the following relational expression is established among Tc, Ta, and Tb.

$$\mathrm{Tc} = \mathrm{Ta} \times \alpha + \mathrm{Tb} \times \beta \quad \cdots \quad \text{Expression 9}$$

$$\alpha + \beta = 1 \quad \cdots \quad \text{Expression 10}$$

In the above expressions, $\alpha$ and B are real numbers and are used as weights.

As illustrated as an example in c in the drawing, for example, the lookup table generation unit 163 reads $f_{a0}$ from the table in a in the drawing for the photon rate corresponding to the count value "0" and reads $f_{b0}$ from the table in b in the drawing. Then, the lookup table generation unit 163 performs weighted addition of the photon rates with the weights $\alpha$ and $\beta$ and regards the added value as a photon rate corresponding to the count value "0" in the combination source lookup table. Similar weighted addition is performed for the count value "1" and the subsequent count values. In this manner, since the combination source lookup tables generated in advance are used in the modification example of the thirteenth embodiment, it is possible to reduce the amount of calculation as compared with the thirteenth embodiment.

The number of times of detection of the combination source lookup table generated in c in the drawing may be larger than the number of times of detection set by the control unit 150. In this case, the lookup table generation unit 163 performs thinning-out of the row (the count values and the photon rates) in c in the drawing in accordance with a setting value.

In a case where the number of times of detection, which is set as "10000" as the number of times of detection of the combination source lookup table in c in the drawing, is "5000", for example, a half the row is thinned out. In the drawing, d illustrates an example of the table after the thinning-out. The hatched rows in d in the drawing are rows that have been thinned out. For example, the rows of the odd count values in c in the drawing are thinned out. Then, new count values from "0" to "4999" are assigned to the remaining rows as illustrated as an example in d in the drawing.

The combination destination lookup table in c in the drawing is held in the memory 164 in a case where there is no need to perform thinning-out, while the combination destination lookup table in d in the drawing is held in the memory 164 in a case where it is necessary to perform thinning-out. The linearizing circuit 161 performs linearizing with reference to the combination destination lookup table.

Note that in a case where the above-mentioned weighted addition is performed, it is also possible to obtain an approximate solution of the photon rate for each count value on the basis of a plurality of inverse functions by a bulb algorithm such as a bisection method.

In this manner, according to the modification example of the thirteenth embodiment of the present technology, the lookup table generation unit 163 obtains the combination destination lookup table through weighted addition of the plurality of combination source lookup tables, and it is thus possible to reduce the amount of calculation.

<15. Modification example of each embodiment>

It should be noted that the above-described embodiments show examples for embodying the present technique, and matters in the embodiments and matters specifying the invention in the claims have a corresponding relationship. Likewise, the matters specifying the invention in the claims and the matters having the same names in the embodiments of the present technique have a corresponding relationship. However, the present technique is not limited to the embodiments and can be embodied by applying various modifications to the embodiments without departing from the gist thereof.

<16. Exemplary application to moving body>

The technique of the present disclosure (the present technique) can be applied to various products. For example, the technique according to the present disclosure may be implemented as a device equipped in any type of moving body such as an automobile, an electric vehicle, a hybrid electric vehicle, a motorcycle, a bicycle, a personal mobility device, an airplane, a drone, a ship, and a robot.

Fig. 29 is a block diagram illustrating a schematic configuration example of a vehicle control system, which is an example of a moving body control system to which the technique according to the present disclosure is applicable.

The vehicle control system 12000 includes a plurality of electronic control units connected thereto via a communication network 12001. In the example illustrated in Fig. 29, the vehicle control system 12000 includes a drive system control unit 12010, a body system control unit 12020, a vehicle exterior information detection unit 12030, a vehicle interior information detection unit 12040, and an integrated control unit 12050. In addition, as a functional configuration of the integrated control unit 12050, a microcomputer 12051, an audio/image output unit 12052, and an in-vehicle network interface (I/F) 12053 are illustrated.

The drive system control unit 12010 controls the operation of a device related to a vehicle drive system according to various programs. For example, the drive system control unit 12010 functions as control devices, such as a driving force generation device for generating driving force for the vehicle, such as an internal combustion engine or a driving motor; a driving force transmission mechanism for transmitting driving force to wheels; a steering mechanism for adjusting a turning angle of the vehicle; a braking device that generates braking force for the vehicle; and the like.

The body system control unit 12020 controls the operations of various devices mounted in the vehicle body, according to various programs. For example, the body system control unit 12020 functions as control devices for a keyless entry system, a smart key system, power window devices, or various lamps such as headlights, backup lights, brake lights, turn signals, fog lights, and the like. In this case, radio waves emitted from a portable device that substitutes for a key or signals from various switches can be input to the body system control unit 12020. The body system control unit 12020 receives the input of the radio waves or signals and controls door lock devices, power window devices, the lamps, and the like of the vehicle.

The vehicle exterior information detection unit 12030 detects information on the outside of the vehicle having the vehicle control system 12000 mounted thereon. For example, the vehicle exterior information detection unit 12030 is connected with an imaging unit 12031. The vehicle exterior information detection unit 12030 causes the imaging unit 12031 to capture an image of the exterior of the vehicle, and receives the captured image. The vehicle exterior information detection unit 12030 may perform object detection processing or distance detection processing for peoples, cars, obstacles, signs, and letters on the road based on the received image.

The imaging unit 12031 is an optical sensor that receives light and outputs an electrical signal according to the light reception amount of this light. The imaging unit 12031 can also output the electrical signal as an image or as distance measurement information. Furthermore, the light received by the imaging unit 12031 may be visible light or invisible light such as infrared light.

The vehicle interior information detection unit 12040 detects information on the inside of the vehicle. For example, a driver state detection unit 12041 that detects a state of a driver is connected to the vehicle interior information detection unit 12040. The driver state detection unit 12041 includes, for example, a camera that captures an image of a driver, and the vehicle interior information detection unit 12040 may calculate the degree of fatigue or concentration of the driver or may determine whether or not the driver is dozing on the basis of detection information inputted from the driver state detection unit 12041.

The microcomputer 12051 can calculate a control target value of the driving force generation device, the steering mechanism, or the braking device based on the information on the outside or the inside of the vehicle acquired by the vehicle exterior information detection unit 12030 or the vehicle interior information detection unit 12040 and output a control command to the drive system control unit 12010. For example, the microcomputer 12051 can perform cooperative control for the purpose of implementing functions of an advanced driver assistance system (ADAS) including collision avoidance or impact mitigation of a vehicle, following traveling based on an inter-vehicle distance, vehicle speed maintenance driving, vehicle collision warning, vehicle lane deviation warning, or the like.

Furthermore, the microcomputer 12051 can perform cooperative control for the purpose of automated driving or the like in which autonomous travel is performed without depending on operations by the driver, by controlling the driving force generator, the steering mechanism, or the braking device or the like on the basis of information about the surroundings of the vehicle, the information being acquired by the vehicle exterior information detection unit 12030 or the vehicle interior information detection unit 12040.

In addition, the microcomputer 12051 can output a control command to the body system control unit 12020 on the basis of the information acquired about the outside of the vehicle by the vehicle exterior information detection unit 12030. For example, the microcomputer 12051 can perform cooperative control for the purpose of preventing glare, such as switching from a high beam to a low beam, by controlling the headlamp according to the position of a preceding vehicle or an oncoming vehicle detected by the vehicle exterior information detection unit 12030.

The audio/image output unit 12052 transmits an output signal of at least one of sound and an image to an output device capable of visually or audibly notifying a passenger or the outside of the vehicle about information. In the example of Fig. 29, an audio speaker 12061, a display unit 12062, and an instrument panel 12063 are illustrated as output devices. The display unit 12062 may include at least one of an on-board display and a head-up display, for example.

Fig. 30 is a diagram illustrating an example of the installation position of the imaging unit 12031.

In Fig. 30, imaging units 12101, 12102, 12103, 12104, and 12105 are included as the imaging unit 12031.

For example, the imaging units 12101, 12102, 12103, 12104, and 12105 are provided at positions such as a front nose, side-view mirrors, a rear bumper, a back door, and an upper portion of a windshield in the vehicle interior of the vehicle 12100. The imaging unit 12101 provided at the front nose and the imaging unit 12105 provided in an upper portion of the windshield in the interior of the vehicle mainly capture images ahead of the vehicle 12100. The imaging units 12102 and 12103 provided at the side-view mirrors mainly capture images on the sides of the vehicle 12100. The imaging unit 12104 provided at the rear bumper or the back door mainly captures images behind the vehicle 12100. The imaging unit 12105 provided in the upper portion of the windshield in the vehicle interior is mainly used for detection of preceding vehicles, pedestrians, obstacles, traffic signals, traffic signs, lanes, and the like.

Here, Fig. 30 illustrates one example of image-capturing ranges of the imaging units 12101 to 12104. An imaging range 12111 indicates the imaging range of the imaging unit 12101 provided at the front nose, imaging ranges 12112 and 12113 respectively indicate the imaging ranges of the imaging units 12102 and 12103 provided at the side-view mirrors, and an imaging range 12114 indicates the imaging range of the imaging unit 12104 provided at the rear bumper or the back door. For example, by superimposing image data captured by the imaging units 12101 to 12104, a bird's-eye view image viewed from the upper side of the vehicle 12100 can be obtained.

At least one of the imaging units 12101 to 12104 may have a function for acquiring distance information. For example, at least one of the imaging units 12101 to 12104 may be a stereo camera including a plurality of imaging elements or may be an imaging element that has pixels for phase difference detection.

For example, the microcomputer 12051 can extract, particularly, the closest three-dimensional object that is on a traveling path of the vehicle 12100 and that travels at a predetermined speed (e.g., 0 km/h or higher) in the substantially same direction as that of the vehicle 12100, as a preceding vehicle by obtaining a distance to each three-dimensional object in the imaging ranges 12111 to 12114 and a temporal change of this distance (a relative speed with respect to the vehicle 12100) based on the distance information obtained from the imaging units 12101 to 12104. Furthermore, the microcomputer 12051 can set an inter-vehicle distance that needs to be secured in advance in front of the preceding vehicle and can perform automated brake control (also including following stop control) or automated acceleration control (also including following start control). Thus, cooperative control can be performed for the purpose of, for example, automated driving in which autonomous travel is performed without depending on operations by the driver.

For example, the microcomputer 12051 can classify and extract three-dimensional data regarding three-dimensional objects into two-wheeled vehicles, normal vehicles, large vehicles, pedestrians, and other three-dimensional objects such as electric poles based on distance information obtained from the imaging units 12101 to 12104, and can use the three-dimensional data to perform automated avoidance of obstacles. For example, the microcomputer 12051 differentiates surrounding obstacles of the vehicle 12100 into obstacles that can be viewed by the driver of the vehicle 12100 and obstacles that are difficult to view. Furthermore, the microcomputer 12051 determines a collision risk indicating the degree of risk of collision with each obstacle, and when the collision risk is a setting value or more and there is a possibility of collision, outputs an alarm to the driver through the audio speaker 12061 or the display unit 12062, or performs forced deceleration or avoidance steering through the drive system control unit 12010, so that it is possible to perform driving support for collision avoidance.

At least one of the imaging units 12101 to 12104 may be an infrared camera that detects infrared rays. For example, the microcomputer 12051 can recognize a pedestrian by determining whether or not there is a pedestrian in the captured images of the imaging units 12101 to 12104. Such pedestrian recognition is performed by, for example, a procedure of extracting feature points in the captured images of the imaging units 12101 to 12104 that are infrared cameras, and a procedure of performing pattern matching processing on a series of feature points indicating an outline of an object and determining whether or not the object is a pedestrian. When the microcomputer 12051 determines that there is a pedestrian in the captured images of the imaging units 12101 to 12104 and recognizes the pedestrian, the audio/image output unit 12052 controls the display unit 12062 so as to superimpose a square contour line for emphasis on the recognized pedestrian to display. Furthermore, the audio/image output unit 12052 may control the display unit 12062 so as to display an icon indicating a pedestrian or the like at a desired position.

An example of the vehicle control system to which the technique according to the present disclosure can be applied has been described thus far. The technology according to the present disclosure can be applied to, for example, each imaging unit 12031 among the components described above. Specifically, the light detection device in each embodiment of the present technology according to the present disclosure can be applied to the imaging unit 12031. It is possible to achieve proper input/output properties of the light detection device and to improve performance of the moving body control system by applying the technology according to the present disclosure to the imaging unit 12031.

<16. Configurations adoptable by present technology>

The present technique can also be configured as follows:

(1) A light detection device including:

light detection elements that detect incidence of photons;
an output unit that outputs a result of imaging by the light detection elements;
a recharge unit that recharges the light detection elements; and
a control unit that controls the recharge unit for at least either a detection interval or the number of times of detection of the photons by the light detection elements on the basis of the result of imaging.

(2) The light detection device according to (1) above, including:

a pixel array unit in which the light detection elements are disposed in an array;
a setting unit that sets the detection interval and the number of times of detection of the photons;
an image processing unit that generates an image signal on the basis of a signal of the pixel array unit output as the result of imaging from the output unit; and
a feature extraction unit that extracts a feature signal on the basis of the result of imaging,
in which
the control unit controls setting information of the setting unit on the basis of the feature signal extracted by the feature extraction unit.

(3) The light detection device according to (2) above, in which the feature signal is a dynamic range detected on the basis of a histogram indicating a detection frequency of the photons as a frequency, a maximum value or a minimum value of the horizontal axis of the histogram, an average brightness value, or a median of maximum detection frequencies.
(4) The light detection device according to (3) above,

in which the image processing unit includes a linearizing circuit in an input stage, and
the feature extraction unit extracts the feature signal on the basis of a signal of the pixel array unit after being subjected to the linearizing circuit.

(5) The light detection device according to (4) above,

in which the pixel array unit outputs a count value of the photons, and
the image processing unit includes
a lookup table generation unit that generates a lookup table in which the count value and a photon rate are associated on the basis of the detection interval and the number of times of detection, and
the linearizing circuit that converts the count value into the photon rate with reference to the lookup table and supplies the photon rate to the feature extraction unit.

(6) The light detection device according to (5) above, in which the lookup table generation unit generates the lookup table using an inverse function of a function representing a response property of the pixel array unit in response to an input of the photons.

(7) The light detection device according to (6) above,

in which the setting unit sets two or more detection intervals, and
the lookup table generation unit generates the lookup table by calculating the photon rate for each count value by the inverse function for each of the detection interval, sorts a group of the calculated photon rates in accordance with a predetermined rule, and assigning the count value to each of the sorted photon rates.

(8) The light detection device according to (6) above,

in which the setting unit sets two or more detection intervals, and
the lookup table includes a plurality of combination source lookup tables and a combination destination lookup table with different detection intervals,
the lookup table generation unit generates the combination destination lookup table by weighted addition of the photon rates in each of the plurality of combination source lookup tables, and
the linearizing circuit refers to the combination destination lookup table.

(9) The light detection device according to (4) above,

in which the pixel array unit, the setting unit, and the output unit are disposed on a first chip,
the control unit, the image processing unit, and the feature extraction unit are disposed on a second chip.

(10) The light detection device according to (9) above,

in which the pixel array unit, the setting unit, and the output unit are disposed on the first chip,
the image processing unit and the feature extraction unit are disposed on the second chip, and
the control unit is disposed on a third chip.

(11) The light detection device according to (9) above,

in which the pixel array unit, the setting unit, the output unit, and the control unit are disposed on the first chip, and
the image processing unit and the feature extraction unit are disposed on the second chip.

(12) The light detection device according to (3) above, in which the feature extraction unit extracts the feature signal on the basis of an image signal generated by the image processing unit.

(13) The light detection device according to (12) above,

in which the pixel array unit, the setting unit, and the output unit are disposed on a first chip,
the image processing unit is disposed on a second chip, and
the control unit and the feature extraction unit are disposed on a third chip.

(14) The light detection device according to (3) above, in which the feature extraction unit includes a linearizing circuit in an input stage and extracts the feature signal on the basis of a signal of the pixel array unit after being subjected to the linearizing circuit.

(15) The light detection device according to (14) above,

in which the pixel array unit, the setting unit, the output unit, the control unit, and the feature extraction unit are disposed on a first chip, and
the image processing unit is disposed on a second chip.

(16) The light detection device according to (3) above, in which the control unit controls setting information of the setting unit on the basis of external control by a user.

(17) The light detection device according to (3) above, in which the control unit sets a plurality of detection intervals as detection intervals of the photons and performs detection of the photons at the plurality of detection intervals.

(18) The light detection device according to (17) above, in which the control unit performs control to maximize gradation of the number of times of detection of the photons with respect to brightness distribution on the basis of a histogram of the brightness distribution in an entire image of a scene.

(19) The light detection device according to (17) above, in which the control unit performs control to maximize gradation of the number of times of detection of the photons with respect to brightness distribution on the basis of a histogram of the brightness distribution in a region of a subject that is a target.

(20) The light detection device according to (17) above, in which the control unit performs control to minimize the number of times of detection of the photons within a range of not falling short of a signal-to-noise ratio (SNR) that is required as a minimum within brightness range of a scene when SNR curves of the plurality of detection intervals are plotted.

(21) The light detection device according to (17) above, in which the control unit performs control to shift only a dynamic range without changing the shape of a sensor response curve created on the basis of a frequency distribution of photon rates created by the feature extraction unit.

(22) The light detection device according to (17) above,

in which the feature extraction unit includes a wave detection circuit that creates a frequency distribution of photon rates on the basis of the result of imaging and a target sensor response curve designing unit that creates a sensor response curve that is a target on the basis of the frequency distribution of the photon rates,

the image processing unit, the wave detection circuit, the target sensor response curve designing unit, and the control unit configure an application processor, and the application processor outputs a signal to control at least either the detection interval or the number of times of detection of the photons for a sensor chip with the pixel array unit formed thereon.

(23) The light detection device according to (17) above,

in which the feature extraction unit includes a wave detection circuit that creates a frequency distribution of photon rates on the basis of the result of imaging and a target sensor response curve designing unit that creates a sensor response curve that is a target on the basis of the frequency distribution of the photon rates,

the image processing unit, the wave detection circuit, and the control unit configure an application processor, and the application processor outputs a signal to control at least either the detection interval or the number of times of detection of the photons for a sensor chip with the pixel array unit and the target sensor response curve designing unit formed thereon.

(24) An application processor that uses as an input, a result of imaging output from a light detection device including

light detection elements that detect incidence of photons.
an output unit that outputs a result of imaging by the light detection elements;
a recharge unit that recharges the light detection elements; and
a control unit that controls the recharge unit for at least either a detection interval or the number of times of detection of the photons by the light detection elements on the basis of the result of imaging,
detects a feature signal in the result of imaging, and outputs a signal to control at least either the detection interval or the number of times of detection of the photons by the light detection elements on the basis of the feature signal.

[Reference Signs List]

100 Light detection device
110 Pulse generator
120 Pixel array unit
130 Interface circuit
140 Signal processing unit
150 Control unit
160 Image processing unit
161, 190 Linearizing circuit
162 Image signal generation unit
163 Lookup table generation unit
164 Memory
170 Feature extraction unit
180 Wave detection circuit

200 Reading circuit
210 Pixel circuit
211 Light detection element
212 Clip transistor
213 Inverter
214 Recharge transistor
220 Counter
230 Selection switch
240 Detection circuit
300 Sensor chip
400 ISP chip
500 Control chip
600 Application processor
610 Target sensor response curve designing unit

**Claims**

1. A light detection device comprising:

   light detection elements that detect incidence of photons;
   an output unit that outputs a result of imaging by the light detection elements;
   a recharge unit that recharges the light detection elements; and
   a control unit that controls the recharge unit for at least either a detection interval or the number of times of detection of the photons by the light detection elements on the basis of the result of imaging.

2. The light detection device according to claim 1, comprising:

   a pixel array unit in which the light detection elements are disposed in an array;
   a setting unit that sets the detection interval and the number of times of detection of the photons;
   an image processing unit that generates an image signal on the basis of a signal of the pixel array unit output as the result of imaging from the output unit; and
   a feature extraction unit that extracts a feature signal on the basis of the result of imaging,
   wherein
   the control unit controls setting information of the setting unit on the basis of the feature signal extracted by the feature extraction unit.

3. The light detection device according to claim 2, wherein the feature signal is a dynamic range detected on the basis of a histogram indicating a detection frequency of the photons as a frequency, a maximum value or a minimum value of the horizontal axis of the histogram, an average brightness value, or a median of maximum detection frequencies.

4. The light detection device according to claim 3,

   wherein the image processing unit includes a linearizing circuit in an input stage, and
   the feature extraction unit extracts the feature signal on the basis of a signal of the pixel array unit after being subjected to the linearizing circuit.

5. The light detection device according to claim 4,

   wherein the pixel array unit outputs a count value of the photons, and
   the image processing unit includes
   a lookup table generation unit that generates a lookup table in which the count value and a photon rate are associated on the basis of the detection interval and
   the number of times of detection, and
   the linearizing circuit that converts the count value into the photon rate with reference to the lookup table and supplies the photon rate to the feature extraction unit.

6. The light detection device according to claim 5, wherein the lookup table generation unit generates the lookup table using an inverse function of a function representing a response property of the pixel array unit in response to an input of the photons.

7. The light detection device according to claim 6,

   wherein the setting unit sets two or more detection intervals, and
   the lookup table generation unit generates the lookup table by calculating the photon rate for each count value by the inverse function for each of the detection interval, sorts a group of the calculated photon rates in accordance with a predetermined rule, and assigning the count value to each of the sorted photon rates.

8. The light detection device according to claim 6,

   wherein the setting unit sets two or more detection intervals, and
   the lookup table includes a plurality of combination source lookup tables and a combination destination lookup table with different detection intervals,
   the lookup table generation unit generates the combination destination lookup table by weighted addition of the photon rates in each of the plurality of combination source lookup tables, and
   the linearizing circuit refers to the combination destination lookup table.

9. The light detection device according to claim 4,

   wherein the pixel array unit, the setting unit, and the output unit are disposed on a first chip, and
   the control unit, the image processing unit, and the feature extraction unit are disposed on a second chip.

10. The light detection device according to claim 9,

    wherein the pixel array unit, the setting unit, and the output unit are disposed on the first chip,
    the image processing unit and the feature extraction unit are disposed on the second chip, and
    the control unit is disposed on a third chip.

11. The light detection device according to claim 9,

    wherein the pixel array unit, the setting unit, the output unit, and the control unit are disposed on the first chip, and
    the image processing unit and the feature extraction unit are disposed on the second chip.

12. The light detection device according to claim 3, wherein the feature extraction unit extracts the feature signal on the basis of an image signal generated by the image processing unit.

13. The light detection device according to claim 12,

    wherein the pixel array unit, the setting unit, and the output unit are disposed on a first chip,
    the image processing unit is disposed on a second chip, and
    the control unit and the feature extraction unit are disposed on a third chip.

14. The light detection device according to claim 3, wherein the feature extraction unit includes a linearizing circuit in an input stage and extracts the feature signal on the basis of a signal of the pixel array unit after being subjected to the linearizing circuit.

15. The light detection device according to claim 14,

    wherein the pixel array unit, the setting unit, the output unit, the control unit, and the feature extraction unit are disposed on a first chip, and
    the image processing unit is disposed on a second chip.

16. The light detection device according to claim 3, wherein the control unit controls setting information of the setting unit on the basis of external control by a user.

17. The light detection device according to claim 3, wherein the control unit sets a plurality of detection intervals as detection intervals of the photons and performs detection of the photons at the plurality of detection intervals.

18. The light detection device according to claim 17, wherein the control unit performs control to maximize gradation of the number of times of detection of the photons with respect to brightness distribution on the basis of a histogram of the brightness distribution in an entire image of a scene.

19. The light detection device according to claim 17, wherein the control unit performs control to maximize gradation of the number of times of detection of the photons with respect to brightness distribution on the basis of a histogram of the brightness distribution in a region of a subject that is a target.

20. The light detection device according to claim 17, wherein the control unit performs control to minimize the number of times of detection of the photons within a range of not falling short of a signal-to-noise ratio (SNR) that is required as a minimum within brightness range of a scene when SNR curves of the plurality of detection intervals are plotted.

21. The light detection device according to claim 17, wherein the control unit performs control to shift only a dynamic range without changing the shape of a sensor response curve created on the basis of a frequency distribution of photon rates created by the feature extraction unit.

22. The light detection device according to claim 17,

wherein the feature extraction unit includes a wave detection circuit that creates a frequency distribution of photon rates on the basis of the result of imaging and a target sensor response curve designing unit that creates a sensor response curve that is a target on the basis of the frequency distribution of the photon rates,
the image processing unit, the wave detection circuit, the target sensor response curve designing unit, and the control unit configure an application processor, and the application processor outputs a signal to control at least either the detection interval or the number of times of detection of the photons for a sensor chip with the pixel array unit formed thereon.

23. The light detection device according to claim 17,

wherein the feature extraction unit includes a wave detection circuit that creates a frequency distribution of photon rates on the basis of the result of imaging and a target sensor response curve designing unit that creates a sensor response curve that is a target on the basis of the frequency distribution of the photon rates,
the image processing unit, the wave detection circuit, and the control unit configure an application processor, and the application processor outputs a signal to control at least either the detection interval or the number of times of detection of the photons for a sensor chip with the pixel array unit and the target sensor response curve designing unit formed thereon.

24. An application processor that uses as an input, a result of imaging output from a light detection device including

light detection elements that detect incidence of photons;
an output unit that outputs a result of imaging by the light detection elements;
a recharge unit that recharges the light detection elements; and
a control unit that controls the recharge unit for at least either a detection interval or the number of times of detection of the photons by the light detection elements on the basis of the result of imaging,
detects a feature signal in the result of imaging, and outputs a signal to control at least either the detection interval or the number of times of detection of the photons by the light detection elements on the basis of the feature signal.

Fig. 1

Fig. 2

Fig. 3

Fig. 4

PIXEL CIRCUIT  210

DETECTION CIRCUIT  240

PULSE GENERATOR  110

CLIP
XRST

SETTING INFORMATION
(DETECTION INTERVAL,
NUMBER OF TIMES OF
DETECTION)

CONTROL UNIT  150

Fig. 5

Fig. 6

Fig. 7

Fig. 8

100

USER CONTROL

FEATURE SIGNAL

150 CONTROL UNIT

110 PULSE GENERATOR

120

ROW DIRECTION
COLUMN DIRECTION
200

130 INTERFACE CIRCUIT

140 FEATURE EXTRACTION UNIT

180 WAVE DETECTION CIRCUIT

170 SIGNAL PROCESSING UNIT

160 IMAGE PROCESSING UNIT

161 LINEARIZING CIRCUIT

162 IMAGE SIGNAL GENERATION UNIT

IMAGE SIGNAL

Fig. 9

Fig. 10

Fig. 11

Fig. 12

EP 4 694 172 A1

Fig. 13

Fig. 14

Fig. 15

Fig. 16

Fig. 17

Fig. 18

ENTIRE IMAGE

a

FREQUENCY

LOGARITHM PHOTON RATE (fp)

b

0.99*N
0.75*N
0.50*N
0.25*N
0.01*N

LOGARITHM PHOTON RATE (fp)

c

COUNT VALUE

1/Tp_1    1/Tp_2    1/Tp_3

-1/Tp_3
-1/Tp_1
-1/Tp_2

LOGARITHM PHOTON RATE (fp)

d

Fig. 19

Fig. 20

Fig. 21

Fig. 22

Fig. 23

Fig. 24

100

110

**PULSE GENERATOR**

150

**CONTROL UNIT**

FEATURE SIGNAL

140

SIGNAL PROCESSING UNIT

170

FEATURE EXTRACTION UNIT

180

**WAVE DETECTION CIRCUIT**

120

**PIXEL ARRAY UNIT**

160

IMAGE PROCESSING UNIT

130

**INTERFACE CIRCUIT**

163

**LUT GENERATION UNIT**

164

**MEMORY**

161

**LINEARIZING CIRCUIT**

162

**IMAGE SIGNAL GENERATION UNIT**

IMAGE SIGNAL

Fig. 25

164

| N$_{cnt}$ | f$_p$ |
|-----------|-------|
| 0 | f$_0$ |
| 1 | f$_1$ |
| 2 | f$_2$ |
| . . . | . . . |
| 4999 | f$_{4999}$ |

Fig. 26

$$f_p = -\frac{\log\left(1 - \dfrac{N_{cnt}}{N_{max}}\right)}{T_p}$$

INVERSE FUNCTION

$T_{p1}(N_{max}=7)$

$N_{cnt}^{(1)}=[1,\cdots,7]$

$T_{p2}(N_{max}=5)$

$N_{cnt}^{(2)}=[1,\cdots,5]$

$T_{p3}(N_{max}=4)$

$N_{cnt}^{(3)}=[1,\cdots,4]$

$T_{p1}$

$N_{cnt}^{(1)}=[3,\cdots,105]$

$T_{p2}$

$N_{cnt}^{(2)}=[1.1,\cdots,23]$

$T_{p3}$

$N_{cnt}^{(3)}=[0.3,\cdots,5]$

Fig. 27

a

b

Fig. 28

| $N_{cnt}$ | $f_p$ |
|---|---|
| 0 | $f_{a0}$ |
| 1 | $f_{a1}$ |
| 2 | $f_{a2}$ |
| 3 | $f_{a3}$ |
| . . . | . . . |
| 9998 | $f_{a9998}$ |
| 9999 | $f_{a9999}$ |

$\underline{a}$

| $N_{cnt}$ | $f_p$ |
|---|---|
| 0 | $f_{b0}$ |
| 1 | $f_{b1}$ |
| 2 | $f_{b2}$ |
| 3 | $f_{b3}$ |
| . . . | . . . |
| 9998 | $f_{b9998}$ |
| 9999 | $f_{b9999}$ |

$\underline{b}$

| $N_{cnt}$ | $f_p$ |
|---|---|
| 0 | $\alpha \times f_{a0} + \beta \times f_{b0}$ |
| 1 | $\alpha \times f_{a1} + \beta \times f_{b1}$ |
| 2 | $\alpha \times f_{a2} + \beta \times f_{b2}$ |
| 3 | $\alpha \times f_{a3} + \beta \times f_{b3}$ |
| . . . | . . . |
| 9998 | $\alpha \times f_{a9998} + \beta \times f_{b9998}$ |
| 9999 | $\alpha \times f_{a9999} + \beta \times f_{b9999}$ |

$\underline{c}$

| $N_{cnt}$ | $f_p$ |
|---|---|
| 0 | $\alpha \times f_{a0} + \beta \times f_{b0}$ |
| – | $\alpha \times f_{a1} + \beta \times f_{b1}$ |
| 1 | $\alpha \times f_{a2} + \beta \times f_{b2}$ |
| – | $\alpha \times f_{a3} + \beta \times f_{b3}$ |
| . . . | . . . |
| 4999 | $\alpha \times f_{a9998} + \beta \times f_{b9998}$ |
| – | $\alpha \times f_{a9999} + \beta \times f_{b9999}$ |

$\underline{d}$

Fig. 29

EP 4 694 172 A1

Fig. 30

# EP 4 694 172 A1

## INTERNATIONAL SEARCH REPORT

| International application No. |
|---|
| **PCT/JP2024/009526** |

### A. CLASSIFICATION OF SUBJECT MATTER

*H04N 25/766*(2023.01)i; *H04N 23/54*(2023.01)i; *H04N 25/70*(2023.01)i; *H04N 25/79*(2023.01)i; *H04N 25/772*(2023.01)i; *H04N 25/773*(2023.01)i

FI:  H04N25/766; H04N25/773; H04N25/70; H04N25/79; H04N25/772; H04N23/54

According to International Patent Classification (IPC) or to both national classification and IPC

### B. FIELDS SEARCHED

Minimum documentation searched (classification system followed by classification symbols)

H04N25/766; H04N23/54; H04N25/70; H04N25/79; H04N25/772; H04N25/773

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2022-106660 A (CANON KABUSHIKI KAISHA) 20 July 2022 (2022-07-20) fig. 1-6, paragraphs [0014]-[0065] | 1, 2, 24 |
| A | fig. 1-6, paragraphs [0014]-[0065] | 3-23 |
| Y | JP 2007-180761 A (SANYO ELECTRIC CO., LTD.) 12 July 2007 (2007-07-12) fig. 1, paragraph [0024] | 1, 2, 24 |
| A | fig. 1, paragraph [0024] | 3-23 |
| A | JP 2020-123930 A (CANON KABUSHIKI KAISHA) 13 August 2020 (2020-08-13) column "abstract" | 1-24 |
| A | JP 2020-17861 A (CANON KABUSHIKI KAISHA) 30 January 2020 (2020-01-30) column "abstract" | 1-24 |
| A | JP 2013-27022 A (RICOH COMPANY, LTD.) 04 February 2013 (2013-02-04) column "abstract" | 1-24 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/009526**

| Patent document cited in search report | | | Publication date (day/month/year) | Patent family member(s) | | | Publication date (day/month/year) |
|---|---|---|---|---|---|---|---|
| JP | 2022-106660 | A | 20 July 2022 | US | 2023/0343879 | A1 | |
| | | | | fig. 1-6, paragraphs [0048]-[0099] | | | |
| | | | | WO | 2022/149576 | A1 | |
| | | | | EP | 4277263 | A1 | |
| | | | | CN | 116711320 | A | |
| | | | | KR | 10-2023-0128061 | A | |
| JP | 2007-180761 | A | 12 July 2007 | US | 2007/0146522 | A1 | |
| | | | | fig. 2, paragraph [0026] | | | |
| | | | | CN | 1992822 | A | |
| | | | | KR | 10-2007-0069060 | A | |
| JP | 2020-123930 | A | 13 August 2020 | US | 2020/0252534 | A1 | |
| | | | | abstract | | | |
| JP | 2020-17861 | A | 30 January 2020 | US | 2020/0033482 | A1 | |
| | | | | abstract | | | |
| JP | 2013-27022 | A | 04 February 2013 | (Family: none) | | | |

Form PCT/ISA/210 (patent family annex) (July 2022)

**EP 4 694 172 A1**

### Patent documents cited in the description

- JP 2022106660 A